# EUROPEAN PATENT APPLICATION

(11) **EP 1 867 487 A2**
(43) Date of publication of application: **19.12.2007**
(21) Application number: 07011142.2
(22) Date of filing: 06.06.2007
(51) Int. Cl.: B41J 3/407

(54) **Label body and label body producing apparatus**

(30) Priority: 12.06.2006 JP 2006162881; 17.10.2006 JP 2006282528
(71) Applicant: Brother Kogyo Kabushiki Kaisha, Nagoya-shi, Aichi-ken 467-8561 (JP)
(72) Inventor: Yamaguchi, Koshiro, Mizuho-ku Nagoya shi Aichi 467-8561 (JP); Ito, Akira, Mizuho-ku Nagoya shi Aichi 467-8561 (JP); Nishikawa, Osamu, Mizuho-ku Nagoya shi Aichi 467-8561 (JP)
(74) Representative: Hofer, Dorothea

(57) **Abstract**

A label body (LT) is configured to be integrally provided with a plurality of RFID labels (T) each including a label main body (Ta) with print to be affixed to an adhesion target and each having an RFID circuit element (To) provided with an IC circuit part (151) that stores information and a loop antenna (152) connected to the IC circuit part (151).

## Description

### TECHNICAL FIELD

The present invention is related to a label body including an RFID label provided with an RFID circuit element for wireless communication with the outside and a label body producing apparatus which can produce this.

### BACKGROUND ART

A tape printing device (label producing apparatus) has been already proposed in which a tape to be a printing target material is stored in a cartridge (tape cassette) in a roll state and desired characters are printed and discharged in a label state while the tape is fed out of the roll in JP, A, 2004-155150.

In this prior art, a roll around which a base tape (double-sided adhesive tape) provided with a separation sheet is wound and a roll around which the print-receiving tape (film tape) to be bonded to the base tape are provided, predetermined print is applied on the print-receiving tape while feeding out the base tape and the print-receiving tape from the two rolls, and the print-receiving tape after printing and the base tape are bonded together to have a printed label tape, which is cut off by cutter to a predetermined length so as to produce a label.

### DISCLOSURE OF THE INVENTION

### Problem to be Solved by the Invention

When a label is to be produced as above, a plurality of labels are preferably associated with each other in handling in some cases when a label is affixed to a plurality of articles associated with each other or when a label is affixed to articles to be sorted out and also to places where the articles are to be sorted out. In this case, it would be convenient for users if a plurality of labels are handled in a lump sum in the state where the plurality of labels are associated with each other, not that the plurality of labels are simply produced in individually separated state.

However, in the above prior art, though a user can easily separate the separation sheet in a single label by cutting off the other layers, leaving only the separation sheet (which is half cut), improvement in handling of the plurality of relevant labels is not given particular consideration.

An object of the present invention is to provide a label body which can improve handling by users of a plurality of relevant labels and a label body producing apparatus which can produce this.

### Means for Solving the Problem

In order to achieve the above object, a first invention is a label body with a plurality of labels formed integrally with each other, each of the plurality of labels including label main body with print to be affixed to an adhesion target, comprising the plurality of labels respectively including at least one RFID label of RFID labels and ordinary labels, each of the RFID labels having an RFID circuit element including an IC circuit part that stores information and a tag antenna connected to the IC circuit part, each of the ordinary labels not having the RFID circuit element.

The first invention of the present application is constructed as a label body integrally provided with a plurality of labels including an RFID label provided with an RFID circuit element. At a result, since a plurality of relevant labels can be handled integrally in an organized state, handling performance by users can be improved as compared with the case where the plurality of labels are simply produced in the individually separated state.

In order to achieve the above object, a second invention is a label body producing apparatus that produces a label body with a plurality of labels according to the first invention, comprising feeding means that feeds a tag tape on which the RFID circuit element, printing means that applies print on a print area provided at the tag tape or a print-receiving tape to be bonded to the tag tape, transmitting/receiving means that transmits/receives information by wireless communication with the RFID circuit element, and a cutter that cuts the tag tape.

In the second invention of the present application, when the tag tape is fed by the feeding means, print is applied by the printing means on the print area of the tag tape (or print-receiving tape), information is transmitted/received by the transmitting/receiving means with respect to the RFID circuit element of the tag tape, and the tag tape (if there is a print-receiving tape, the tag tape and the print-receiving tape) is cut off by the cutter. As a result, the label body is produced which is integrally provided with the plurality of labels including the RFID label provided with the RFID circuit element. By producing the label body in which the plurality of labels are integrated, users can handle the plurality of relevant labels integrally in the organized state. As a result, handling performance can be improved as compared with the case where the plurality of labels are produced simply in the individually separated state.

### Advantages of the Invention

According to the present invention, handling performance by users can be improved for a plurality of relevant labels.

### BRIEF DESCRIPTION OF THE DRAWING

Fig. 1 is a system block diagram illustrating a label body producing system provided with a label body producing apparatus of this embodiment.
Fig. 2 is a perspective view illustrating an entire structure of the label body producing apparatus.
Fig. 3 is a perspective view illustrating an appearance of the internal unit in a state where the label discharge mechanism is removed.
Fig. 4 is a plan view illustrating the structure of the internal unit.
Fig. 5 is an enlarged plan view schematically illustrating a detailed structure of a cartridge.
Fig. 6 is a conceptual view of a conceptual configuration of an RFID circuit element provided at a base tape fed out of a first roll seen from an arrow D direction in Fig. 5.
Fig. 7 is a functional block diagram illustrating a control system of the label body producing apparatus.
Fig. 8 is a functional block diagram illustrating functional configuration of an RFID circuit element.
Fig. 9 is a top view and a bottom view illustrating an example of an appearance of the label body formed by writing (or reading) information of the RFID circuit element and cutting of the printed tag label tape by the label body producing apparatus and a view illustrating the data contents stored in the RFID circuit element in each label constituting the label body.
Fig. 10 is a diagram obtained by rotating the cross sectional view by XA-XA' section in Fig. 9 counterclockwise by 90 degrees, and a diagram obtained by rotating the cross sectional view by XB-XB' section in Fig. 9 counterclockwise by 90 degrees.
Fig. 11 is a view illustrating an example of a screen displayed on PC (terminal or general-purpose computer) at an access (reading or writing) to RFID tag information of an IC circuit part of the RFID circuit element by the label body producing apparatus.
Fig. 12 is a flowchart illustrating a control procedure executed by a control circuit.
Fig. 13 is a flowchart illustrating a detailed procedure of Step S100.
Fig. 14 is a flowchart illustrating a detailed procedure of Step S200.
Fig. 15 is a flowchart illustrating a detailed procedure of Step S400.
Fig. 16 is a top view illustrating an example of an appearance of a label body when a label body production mode is set to a plural label mode 2 in which printing contents of a plurality of labels constituting a label body are substantially the same and the writing contents by wireless communication are substantially different and a diagram illustrating contents stored in the RFID circuit element of each label constituting the label body.
Fig. 17 is a top view illustrating an example of an appearance of a label body when a label body production mode is set to the plural label mode 2 in which printing contents of a plurality of labels constituting a label body are substantially the same and the writing contents by wireless communication are substantially different and a diagram illustrating contents stored in the RFID circuit element of each label constituting the label body.
Fig. 18 is a top view illustrating an example of an appearance of a label body when a label body production mode is set to a plural label mode 4 in which both printing contents of a plurality of labels constituting a label body and the writing contents by wireless communication are both substantially different and a diagram illustrating contents stored in the RFID circuit element of each label constituting the label body.
Fig. 19 is top view illustrating an example of an appearance of a label body when a label body production mode is set to the plural label mode 4 in which both printing contents of a plurality of labels constituting a label body and the writing contents by wireless communication are both substantially different and a diagram illustrating contents stored in the RFID circuit element of each label constituting the label body.
Fig. 20 is a flowchart illustrating a detailed procedure of Step S100' executed by the control circuit in a variation in which the label body includes an ordinary label not having the RFID circuit element.
Fig. 21 is a top view illustrating an example of an appearance of a produced label body when the label body production mode is set to the plural label mode 1 in a variation in which the label body includes a ordinary label not having the RFID circuit element and a diagram illustrating the contents stored in the RFID circuit element of each RFID label constituting the label body.
Fig. 22 is a top view illustrating an example of an appearance of a produced label body when the label body production mode is set to the plural label mode 1 in a variation in which the label body includes a ordinary label not having the RFID circuit element and a diagram illustrating the contents stored in the RFID circuit element of each RFID label constituting the label body.
Fig. 23 is a top view illustrating an example of an appearance of a produced label body when the label body production mode is set to the plural label mode 1 in a variation in which the label body includes a ordinary label not having the RFID circuit element and a diagram illustrating the contents stored in the RFID circuit element of each RFID label constituting the label body.
Fig. 24 is a top view illustrating an example of an appearance of a produced label body when the label body production mode is set to the plural label mode 2 in a variation in which the label body includes a ordinary label not having the RFID circuit element and a diagram illustrating the contents stored in the RFID circuit element of each RFID label constituting the label body.
Fig. 25 is a top view illustrating an example of an appearance of a produced label body when the label body production mode is set to the plural label mode 2 in a variation in which the label body includes a ordinary label not having the RFID circuit element and a diagram illustrating the contents stored in the RFID circuit element of each RFID label constituting the label body.
Fig. 26 is a top view illustrating an example of an appearance of a produced label body when the label body production mode is set to the plural label mode 2 in a variation in which the label body includes a ordinary label not having the RFID circuit element and a diagram illustrating the contents stored in the RFID circuit element of each RFID label constituting the label body.
Fig. 27 is a top view illustrating an example of an appearance of a produced label body when the label body production mode is set to the plural label mode 4 in a variation in which the label body includes a ordinary label not having the RFID circuit element and a diagram illustrating the contents stored in the RFID circuit element of each RFID label constituting the label body.
Fig. 28 is a top view illustrating an example of an appearance of a produced label body when the label body production mode is set to the plural label mode 3 or 4 in a variation in which the label body includes a ordinary label not having the RFID circuit element and a diagram illustrating the contents stored in the RFID circuit element of each RFID label constituting the label body.
Fig. 29 is a plan view illustrating a detailed structure of the cartridge in a variation in which tape bonding is not performed.
Fig. 30 is a plan view illustrating a detailed structure of the cartridge in another variation in which tape bonding is not performed.

### BEST MODE FOR CARRYING OUT THE INVENTION

A label body producing apparatus of this embodiment will be described referring to the attached drawings.

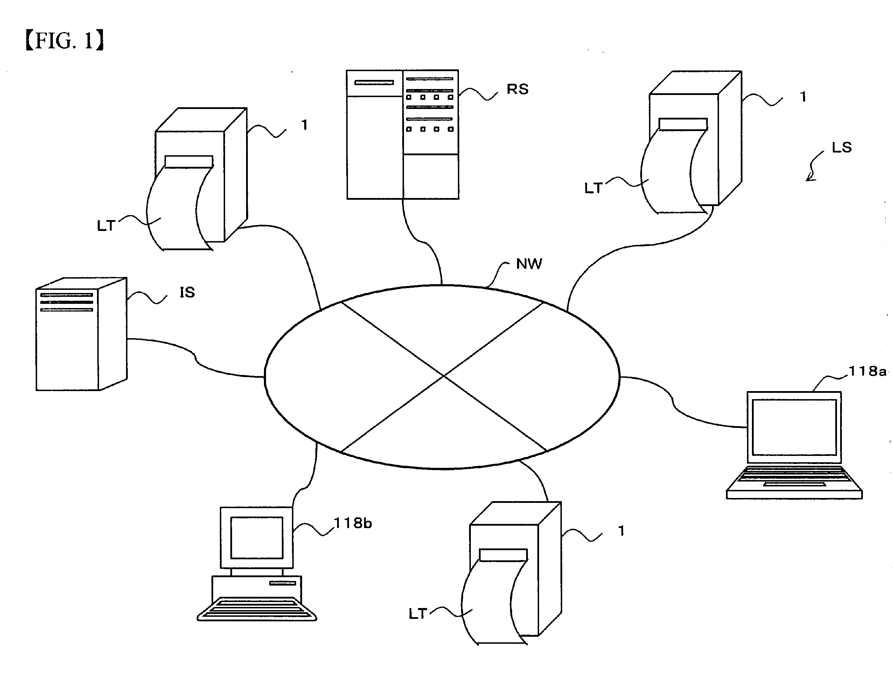

Fig. 1 is a system block diagram illustrating a label body producing system having the label body producing apparatus of this embodiment.

In a label body producing system LS shown in Fig. 1, a label body producing apparatus 1 is connected to a route server RS, a plurality of information servers IS, a terminal 118a, and a general-purpose computer 118b through a wired or wireless communication line NW. The terminal 118a and the general-purpose computer 118b are collectively referred to simply as "PC118" below as appropriate.

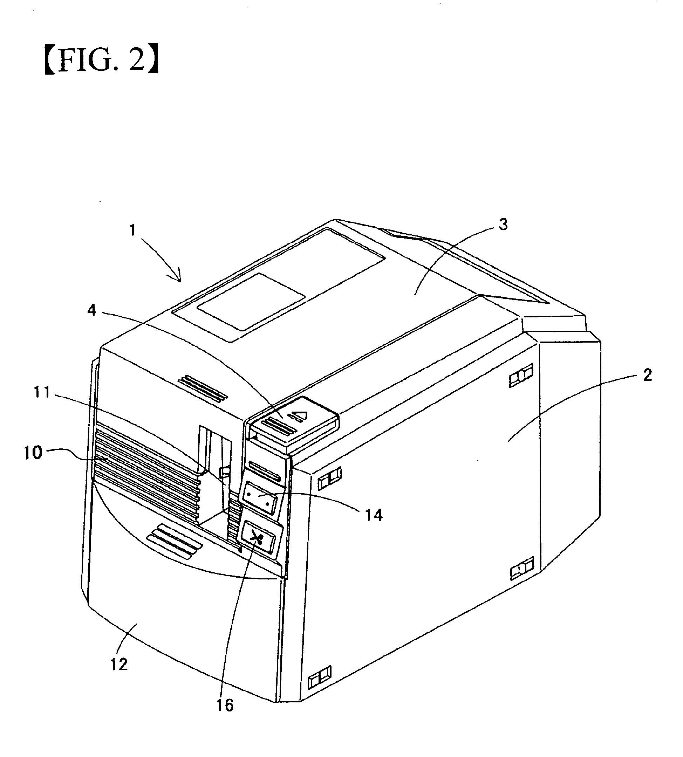

Fig. 2 is a perspective view illustrating the entire structure of the label body producing apparatus 1.

In Fig. 2, the label body producing apparatus 1 connected to the PC 118 produces a label body with desired print based on operation from the PC 118 and has a apparatus body 2 and an opening/closing lid 3 provided capable of being opened/closed on the top face of the apparatus body 2.

The apparatus body 2 comprises a side wall 10 located at the front side (left front side in Fig. 2) and provided with a label discharge port 11 that discharges a label body LT (which will be described later) produced inside the apparatus body 2 to the outside and a side lid 12 provided below the side wall 10 and the label discharge port 11 and having its lower end rotatably supported.

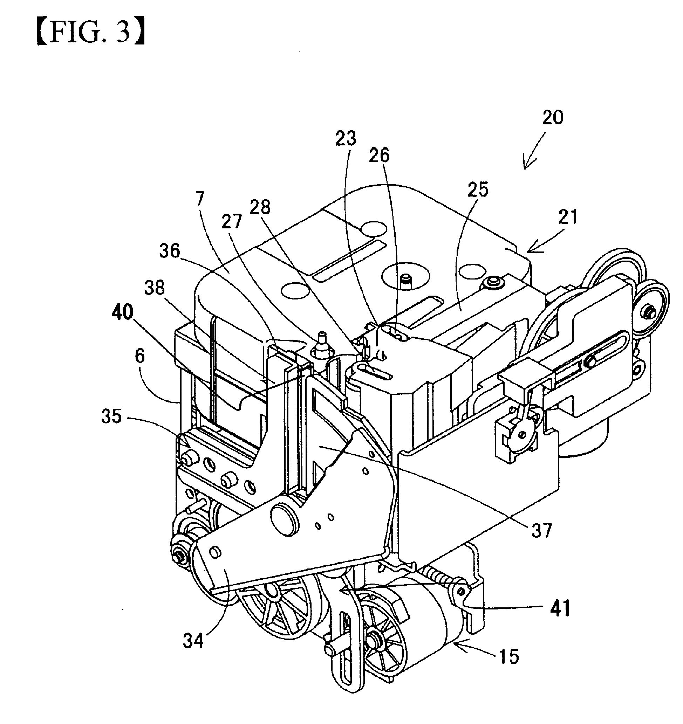

Below an opening/closing button 4 in the side wall 10, a power button 14 that powers on/off of the label body producing apparatus 1 is provided. Below this power button 14, a cutter driving button 16 is provided that drives a cutting mechanism 15 (See Fig. 3, which will be described later) disposed in the apparatus body 2 through manual operation by a user, and a tag label tape with print 109 (which will be described later) is cut to a desired length so as to produce the label body LT by pushing this button 16.

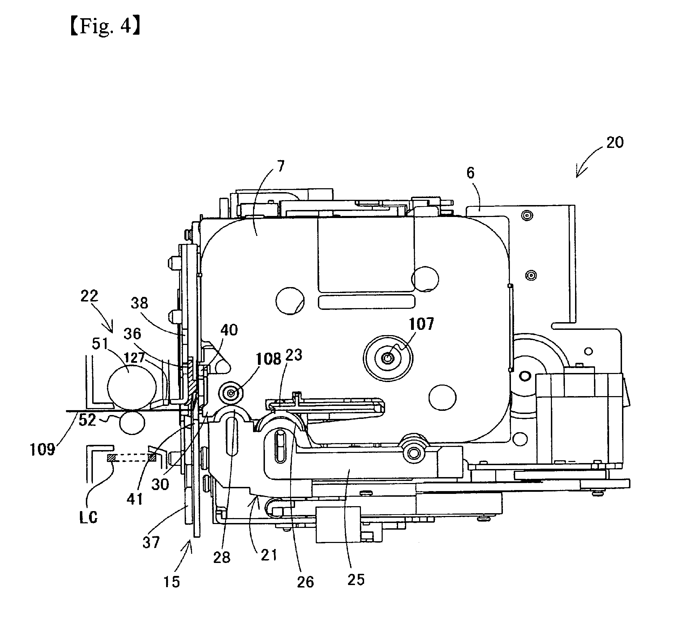

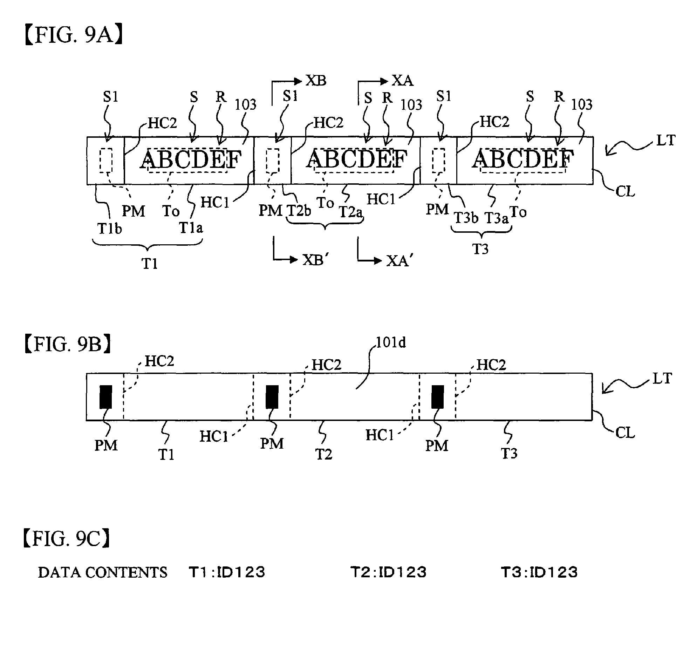

Fig. 3 is a perspective view illustrating a structure (however, a loop antenna LC, which will be described later, is omitted) of an internal unit 20 inside the label body producing apparatus 1. In Fig. 3, the internal unit 20 comprises a cartridge holder 6 that stores a cartridge 7, a printing mechanism 21 provided with a print head (thermal head) 23, the cutting mechanism 15, a half cut unit 35, and a label discharge mechanism 22 (See Fig. 4, which will be described later) that discharges the produced label body LT (See Fig. 9, which will be described later) from the label discharge port 11 (See Fig. 2).

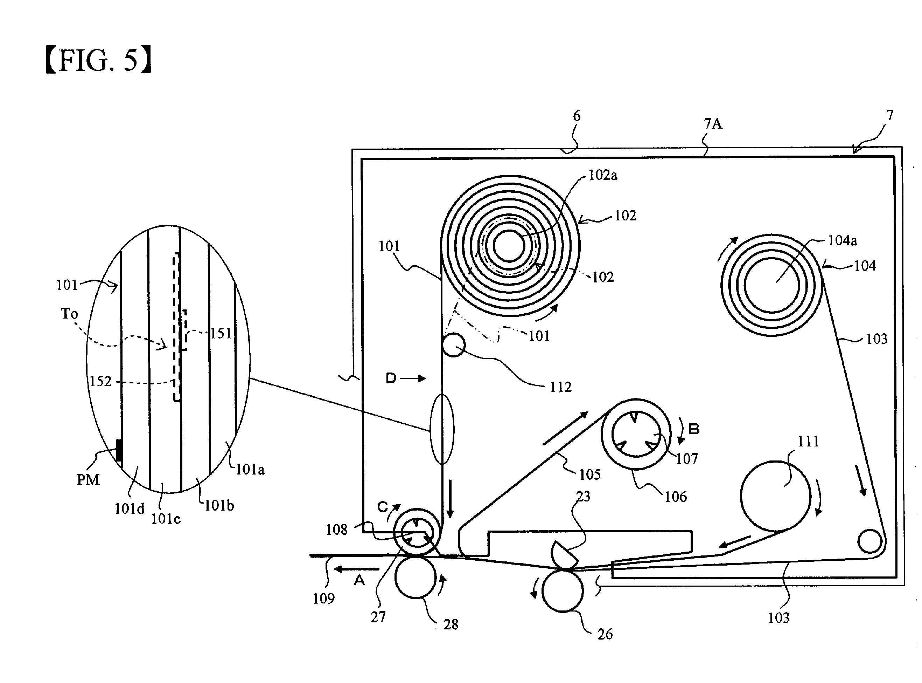

Fig. 4 is a plan view illustrating the structure of the internal unit 20 shown in Fig. 3, and Fig. 5 is an enlarged plan view schematically illustrating the detailed structure of the cartridge 7.

In Figs. 4 and 5, the cartridge holder 6 stores the cartridge 7 so that the direction of the tag label tape 109 with print in the width direction discharged from the label discharge port 11 should be perpendicular. The cartridge 7 has a housing 7A, a first roll 102 arranged inside the housing 7A and around which a base tape 101 in the band state is wound, a second roll 104 around which a transparent cover film 103 having substantially the same width as that of the base tape 101 is wound, a ribbon-supply-side-roll 111 that feeds out an ink ribbon 105 (thermal transfer ribbon, however, it is not needed when the print-receiving tape is a thermal tape), a ribbon take-up roller 106 that taking up the ribbon 105 after printing, a feeding roller 27 rotatably supported in the vicinity of a tape discharge portion 30 of the cartridge 7, and a guide roller 112 functioning as feeding position regulating means.

The feeding roller 27 presses and bonds the base tape 101 and the cover film 103 together so as to form the tag label tape 109 with print and feeds the tape in a direction shown by an arrow A (also functioning as a pressure roller).

In the first roll 102, the base tape 101 in which a plurality of RFID circuit elements To are sequentially arranged in the longitudinal direction with a predetermined equal interval is wound around a reel member 102a. The base tape 101 has a four-layered structure (See the partially enlarged view in Fig. 5) in this example and is constructed in lamination in the order of an adhesive layer 101a made of an appropriate adhesive, a colored base film 101b made of polyethylene terephthalate (PET) and the like, an adhesive layer 101c made of an appropriate adhesive, and a separation sheet 101d from the side wound inside (right side in Fig. 5) toward the opposite side (left side in Fig. 5).

On the back side of the base film 101b (left side in Fig. 5), a loop antenna 152 constructed in the loop-coil shape that transmits/receives information is provided integrally in this embodiment, the IC circuit part 151 connected to it and storing information is formed, and the RFID circuit element To is comprised by them.

On the front side of the base film 101b (right side in Fig. 5), the adhesive layer 101a that affixes the cover film 103 later is formed, while on the back side of the base film 101b (left side in Fig. 5), the separation sheet 101d is affixed to the base film 101b by the adhesive layer 101c provided so as to include the RFID circuit element To.

When the label body LT finally completed in the label state is to be affixed to a predetermined article or the like, the separation sheet 101d enables adhesion to the article by the adhesive layer 101c upon detachment of the separation sheet. At this time, the label body Lt is constructed to be integrally provided with a plurality of labels including at least the RFID label T of the RFID labels T each having the RFID circuit element To and the ordinary labels L not provided with the RFID circuit element To, and each label is connected through the separation sheet 101d at a first half-cut line HC1 (See Fig. 9, which will be described later) obtained by cutting the layers other than the separation sheet 101d (the adhesive layer 101a, the base film 101b, and the adhesive layer 101c) in the width direction. Also, on the surface of the separation sheet 101d, a predetermined identification mark (identification mark painted in black in this example. Alternatively, it may be a hole drilled and penetrating the base tape 101 by laser machining or the like. Alternatively, it may be a Thomson type machined hole or the like) at a predetermined position corresponding to each RFID circuit element To (a position further front from the tip end of the antenna 152 on the front in the feeding direction in this example) PM is provided.

The second roll 104 has the cover film 103 wound around a reel member 104a. In the cover film 103 fed out of the second roll 104, the ribbon 105 driven by the ribbon-supply-side-roll 111 and the ribbon take-up roller 106 arranged on its back face side (that is, the side to be affixed to the base tape 101) is brought into contact with the back face of the cover film 103 by being pressed by the print head 23.

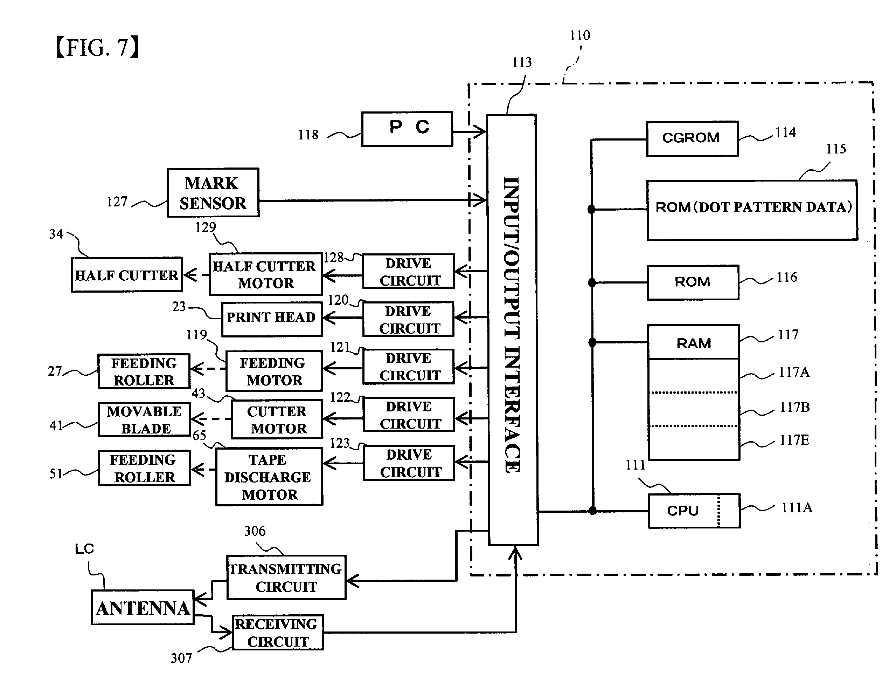

In the above construction, when the cartridge 7 is attached to the cartridge holder 6 and the roller holder 25 (See Fig. 3) is moved from the release position to the printing position, the cover film 103 and the ink ribbon 105 are held between the print head 23 and the platen roller 26, and the base tape 101 and the cover film 103 are held between the feeding roller 27 and the pressure roller 28. And the ribbon take-up roller 106 and the feeding roller 27 are rotated/driven by the driving force of the feeding motor 119 in a direction shown by an arrow B and an arrow C, respectively, in synchronization with each other. At this time, a tape feed roller driving shaft 108, the pressure roller 28 and the platen roller 26 are connected through the gear mechanism (not shown), and with the driving of the tape feed roller driving shaft 108, the feeding roller 27, the pressure roller 28, and the platen roller 26 are rotated, and the base tape 101 is fed out of the first roll 102 and supplied to the feeding roller 27 as mentioned above. On the other hand, the cover film 103 is fed out of the second roll 104, and the plurality of heater elements of the print head 23 are electrified by a print-head drive circuit 120 (See Fig. 7, which will be described later). As a result, print R (See Fig. 9, which will be described later) corresponding to the RFID circuit element To on the base tape 101 to become the bonding target is printed on the back face of the cover film 103. And the base tape 101 and the cover film 103 on which the printing has been finished are bonded together by the feeding roller 27 and the pressure roller 28 to be integrated and formed as the tag label tape 109 with print and fed out of the cartridge 7 through the tape discharge portion 30. The ink ribbon 105 finished with printing on the cover film 103 is wound up by the ribbon take-up roller 106 by driving of the ribbon take-up driving shaft 107.

On the other hand, as mentioned above, the internal unit 20 is provided with the cutting mechanism 15 and the label discharge mechanism 22 and is also provided with the loop antenna LC that writes/reads information through wireless communication to/from the RFID circuit element To provided at the base tape 101 (printed tag label tape after bonding, the same applies to the following). And after information writing/reading is carried out by the loop antenna LC to/from the tag label tape 109 with print produced by bonding as above at the RFID circuit element To and the predetermined number of labels constituting the label body are produced, the tag label tape 109 with print is cut by the cutting mechanism 15 automatically or by operating the cutter driving button 16 (See Fig. 2) and the label body LT is produced. This label body LT is discharged from the label discharge port 11 formed at a side wall 10 (See Fig. 2) by the label discharge mechanism 22 after that.

Also, the label discharge mechanism 22 has a mark sensor 127 that detects an identification mark PM provided at the separation sheet 101d of the tag label tape 109 with print. This mark sensor 127 is a sensor made of a known light emitting diode and a photo transistor that detects the identification mark PM.

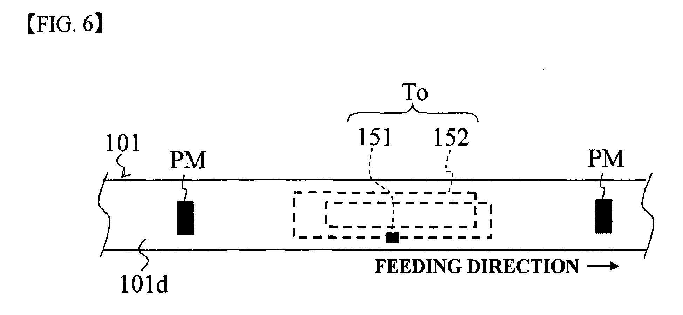

Fig. 6 is a conceptual diagram illustrating conceptual configuration of the RFID circuit element To provided at the base tape 101 fed out of the first roll 102, seen from an arrow D direction in Fig. 5. In Fig. 6, the RFID circuit element To comprises the loop antenna 152 constructed in the loop-coil shape that transmits/receives information and the IC circuit part 151 connected to that that stores the information. Also, on the surface of the separation sheet 101d, the above-mentioned identification mark PM is provided at a predetermined position corresponding to each RFID circuit element To, respectively.

In Fig. 3 and Fig. 4, the loop antenna LC is arranged in the vicinity of the pressure roller 52 so that the pressure roller 52 is located at the center in the radial direction (inside the radial direction. In detail, on the coil center axis), and an access (information reading or information writing) is made to the RFID circuit element To provided at the tag label tape 109 with print by magnetic induction (including electromagnetic induction, magnetic coupling and other non-contact contact methods through a magnetic field).

Also, on the upstream side in the feeding direction from the feeding roller 51 (in other words, between a half cutter 34, which will be described later, and the loop antenna LC), the mark sensor 127 which can detect the appropriate identification mark PM (See Fig. 6) provided in correspondence with the position of each RFID circuit element is provided at the separation sheet 101d of the base tape 101. This mark sensor 127 is a reflective-type known photoelectric sensor. The mark sensor 127 is not limited to the above reflective type but a transmissive photoelectric sensor may be used.

The half cut unit 35 comprises a cradle 38 arranged conforming to the fixed blade 40, the half cutter 34 opposed to the cradle 38 and arranged on the movable blade 41 side, a first guide portion 36 arranged conforming to the fixed blade 40 between the fixed blade 40 and the cradle 38, and a second guide portion 37 opposed to the first guide portion 36 and arranged conforming to the movable blade 41.

Fig. 7 is a functional block diagram illustrating a control system of the label body producing apparatus 1 of this embodiment. In Fig. 7, on a control board (not shown) of the label body producing apparatus 1, a control circuit 110 is arranged.

At the control circuit 110, a CPU 111 provided with a timer 111A inside and controlling each device, an input/output interface 113 connected to this CPU 111 through a data bus, a CGROM 114, ROM 115, 116, and a RAM 117 are provided.

In the ROM 116, a print driving control program for driving the print head 23, the feeding motor 119, and the tape discharge motor 65 by reading out data of a print buffer in correspondence with the code data of characters such as characters, numerals and the like inputted from the PC 118, a pulse-number determining program for determining the number of pulses corresponding to a forming energy amount of each print dot, a cutting driving control program for feeding the tag label tape 109 with print to the cut position by driving the feeding motor 119 when printing is finished and cutting the tag label tape 109 with print by driving a cutter motor 43, and a tape discharge program for forcedly discharging the tag label tape 109 with print which has been cut (= label body LT) from the label discharge port 11 by driving the tape discharge motor 65, and other various programs required for control of the label body producing apparatus 1 are stored. The CPU 111 executes various calculations based on the various programs stored in the ROM 116.

The PC 118, the print-head drive circuit 120 that drives the print head 23, a feeding motor drive circuit 121 that drives the feeding motor 119, a cutter motor drive circuit 122 that drives the cutter motor 43, a half-cutter motor drive circuit 128 that drives a half-cutter motor 129, a tape discharge motor drive circuit 123 that drives the tape discharge motor 65, the transmitting circuit 306 that generates a carrier wave for making an access (reading/writing) to the RFID circuit element To through the loop antenna LC and modulates the carrier wave based on a control signal inputted from the control circuit 110, the receiving circuit 307 that demodulating a response signal received through the loop antenna LC from the RFID circuit element To and outputting it to the control circuit 110, the mark sensor 127 that detects the identification mark PM.

In a control system centered on the control circuit 110, when character data is inputted through the PC 118, the text (document data) is sequentially stored in the text memory 117A, the print head 23 is driven through the drive circuit 120, and each of the heater elements is selectively heated/driven in correspondence with printing dots for one line for printing the dot pattern data stored in the print buffer 117B, in synchronization with which the feeding motor 119 carries out feeding control of the tape through the drive circuit 121. Also, the transmitting circuit 306 carries out modulation control of the carrier wave based on the control signal from the control circuit 110, and the receiving circuit 307 performs processing of the demodulated signal based on the control signal from the control circuit 110.

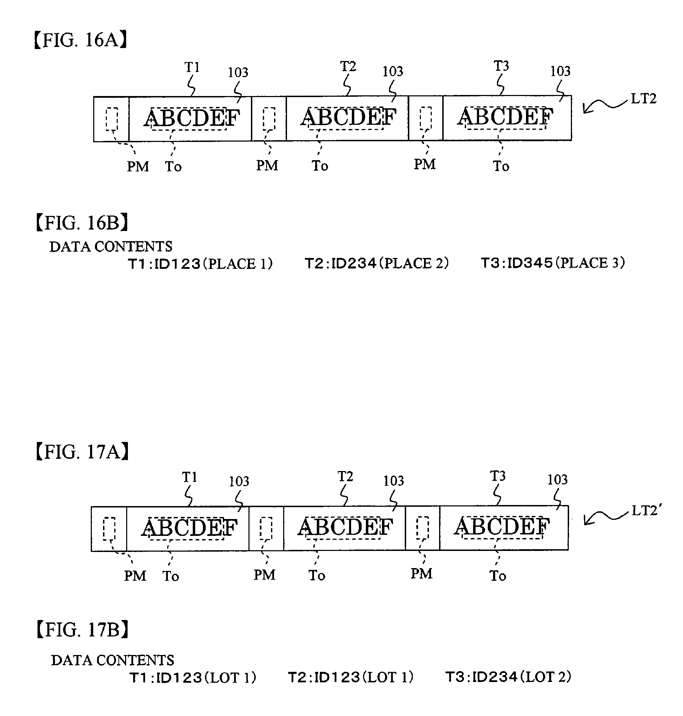

Fig. 16 is a circuit diagram schematically illustrating a circuit configuration of a connection portion among the transmitting circuit 306, the receiving circuit 307, and the loop antenna LC. In Fig. 16, the transmitting circuit 306 is connected to the device-side loop antenna LC, while the receiving circuit 307 is connected to a capacitor 310 connected in series to the device-side loop antenna LC.

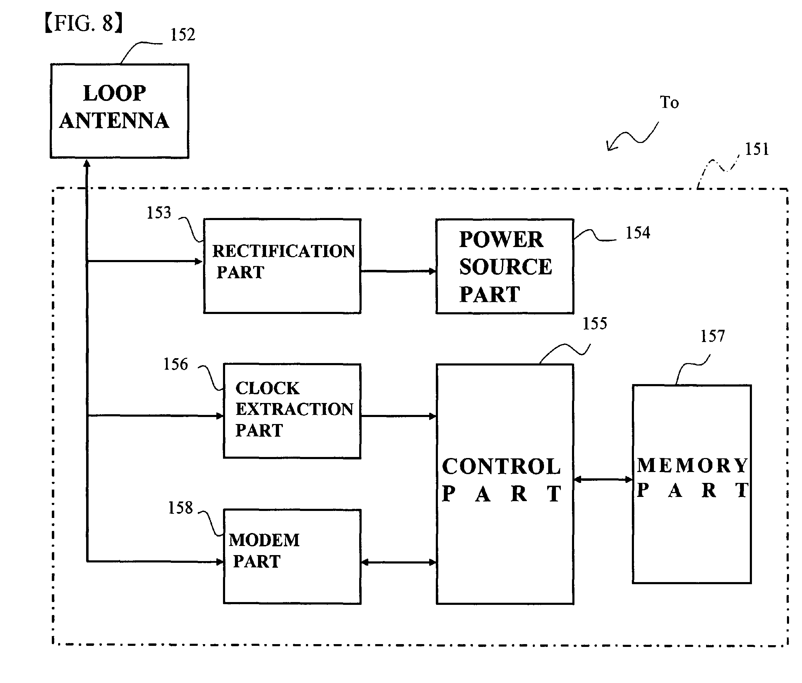

Fig. 8 is a functional block diagram illustrating a functional configuration of the RFID circuit element To. In Fig. 8, the RFID circuit element To has the loop antenna 152 that transmits/receives a signal in a non-contact manner with the loop antenna LC on the label body producing apparatus 1 by magnetic induction and the IC circuit part 151 connected to the loop antenna 152.

The IC circuit part 151 comprises a rectification part 153 that rectifies the carrier wave received by the loop antenna 152, a power source part 154 that accumulates energy of the carrier wave rectified by the rectification part 153 so as to make it a driving power supply, a clock extraction part 156 that extracts a clock signal from the carrier wave received by the loop antenna 152 so as to supply it to a control part 155, a memory part 157 which can store a predetermined information signal, a modem part 158 connected to the loop antenna 152, and the control part 155 that controls operation of the RFID circuit element To through the rectification part 153, the clock extraction part 156, the modem part 158 and the like.

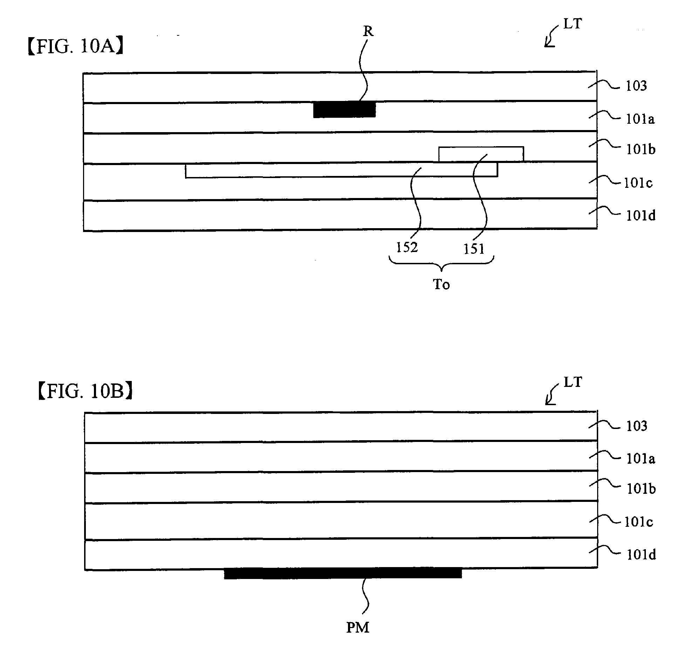

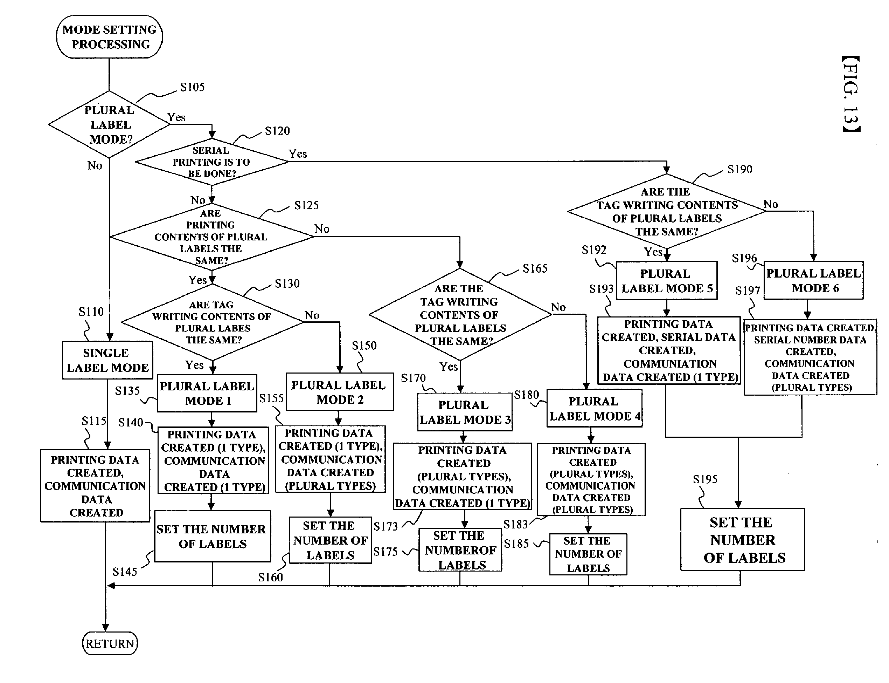

Figs. 9A and 9B are views illustrating an example of the appearance of the label body LT formed after information writing (or reading) of the RFID circuit element To and cutting of the tag label tape 109 with print by the label body producing apparatus 1 constructed as above have been finished, in which Fig. 9A is a top view and Fig. 9B is a bottom view. Fig. 9C is a diagram illustrating data contents stored in the RFID circuit element To of each label (in this embodiment, RFID labels T1 to T3) constituting the label body LT. Also, Fig. 10A is a diagram obtained by rotating a cross sectional diagram of the XA-XA' section in Fig. 9 counterclockwise by 90 degrees, and FIG. 10B is a diagram obtained by rotating a cross sectional diagram of the XB-XB' section in Fig. 9 counterclockwise by 90 degrees. In the figures, a label body produced in a plural label mode 1 (See Fig. 13, which will be described later) in which the label body LT is comprised by three RFID labels T1 to T3, and the printed contents and the tag writing contents of the RFID labels T1 to T3 are substantially the same is illustrated as an example.

In Figs. 9A, 9B, 10A, and 10B, the label body LT is in the five-layered structure in which the cover film 103 is added to the four-layered structure shown in Fig. 5 as mentioned above made of four layers of the cover film 103, the adhesive layer 101a, the base film 101b, the adhesive layer 101c, and the separation sheet 101d from the cover film 103 side (upper side in Fig. 10) to the opposite side (lower side in Fig. 10). And in each RFID label T constituting the label body LT, the RFID circuit element To including the loop antenna 152 provided on the back side of the base film 101b is provided in the base film 101b and the adhesive layer 101c as mentioned above, and the print R (in this embodiment, the letters of "ABCDEF") corresponding to stored information or the like of the RFID circuit element To is printed on the back face of the cover film 103. Also, in the RFID circuit element To of each RFID label T, an access ID (ID123 in this embodiment), which is specific identification information (tag ID), is stored in the RFID circuit element To of each RFID label T.

Also, in each RFID label T constituting the label body Lt, a half-cut line HC (Two lines of the above-mentioned first half-cut line HC1 and a second half-cut line HC2, which will be described later in this embodiment for discriminating each label constituting the label body LT) are formed substantially along the tape width direction by the half cutter 34 as mentioned above in the cover film 103, the adhesive layer 101a, the base film 101b, and the adhesive layer 101c. In the cover film 103, a portion held between the first and the second half-cut lines HC1, HC2 (however, for the RFID label T3, a portion held between the second half-cut line HC2 and a cut line CL by full-cut) becomes a print area S on which the label print R is printed, while the tip end side in the tape longitudinal direction from the print area S with the second half-cut line HC2 between them (left side in Fig. 9A) is a blank area S1. Also, each RFID label T constituting the label body LT comprises a label main body Ta with print, which is a portion corresponding to the print area S of the cover film 103 and a blank portion Tb, which is a portion corresponding to the blank area S1 (See Fig. 9B). In other words, each RFID label T is comprised so that the label main body Ta with print (T1a, T2a, T3a in the figure) and the blank portion Tb (T1b, T2b, T3b in the figure) are connected through the separation sheet 101d at the second half-cut line HC2 where the layers other than the separation sheet 101d is cut in the width direction. The blank portion Tb of each label is provided with the identification mark PM, respectively.

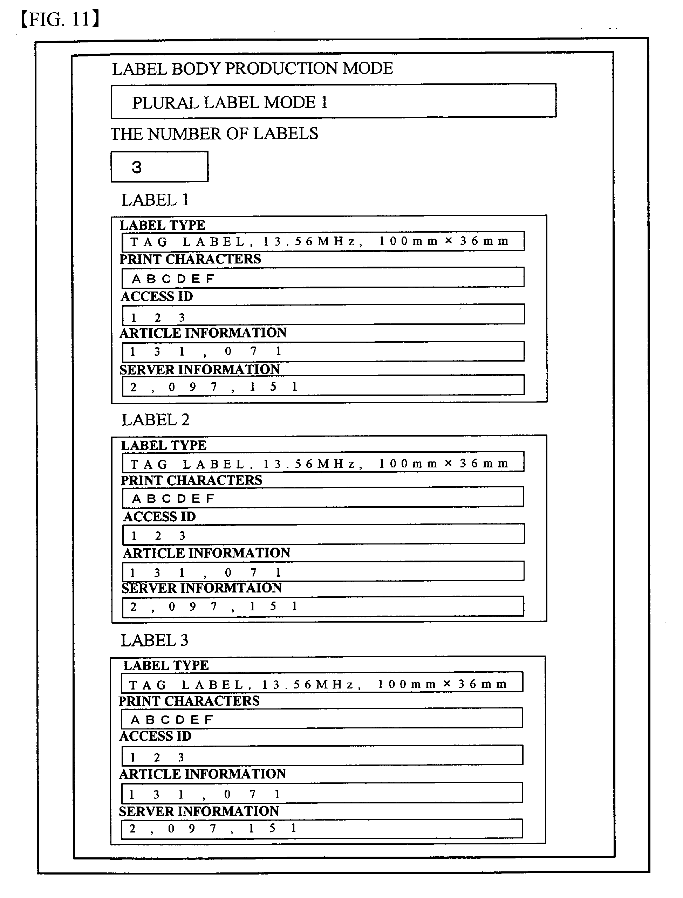

Fig. 11 is a view showing examples of a screen displayed on the PC 118 (the terminal 118a or the general-purpose computer 118b) at production of the label body by the above-mentioned label body producing apparatus 1.

In Fig. 11, in this embodiment, the type of the label body production mode (single label mode or plural label modes 1 to 6. The detail will be described later), the number of labels constituting the label body if it is the plural label mode, and for each of the labels, the label type (RFID label or ordinary label, and in the case of the RFID label, access frequency, tape dimension), the print characters R to be printed, an access (reading or writing) ID, which is identification information (tag ID) specific to the RFID circuit element To if the constituted label is the RFID label, an address of the article information stored in the information server IS, and an address of a storage destination of the corresponding information in the route server RS can be displayed on the PC 118. Fig. 11 shows an example that the label body LT is produced in the plural label mode 1 and the printed contents and the tag writing contents of the RFID labels T1 to T3 constituting the label body Lt are substantially the same. And the label body producing apparatus 1 is operated by operation of the PC 118, the corresponding print characters R is printed on the cover film 103 of each label constituting the label body LT and the information such as the writing ID and the article information is written in the IC circuit part 151 (or, the information such as the reading ID or the article information stored in the IC circuit part 151 in advance is read out).

At the above reading or writing, correspondence between the tag ID of the RFID circuit element To of each label constituting the produced label body LT and the information read out of the IC circuit part 151 of each label (or information written in the IC circuit part 151) is stored in the above-mentioned route server RS to be referenced as necessary.

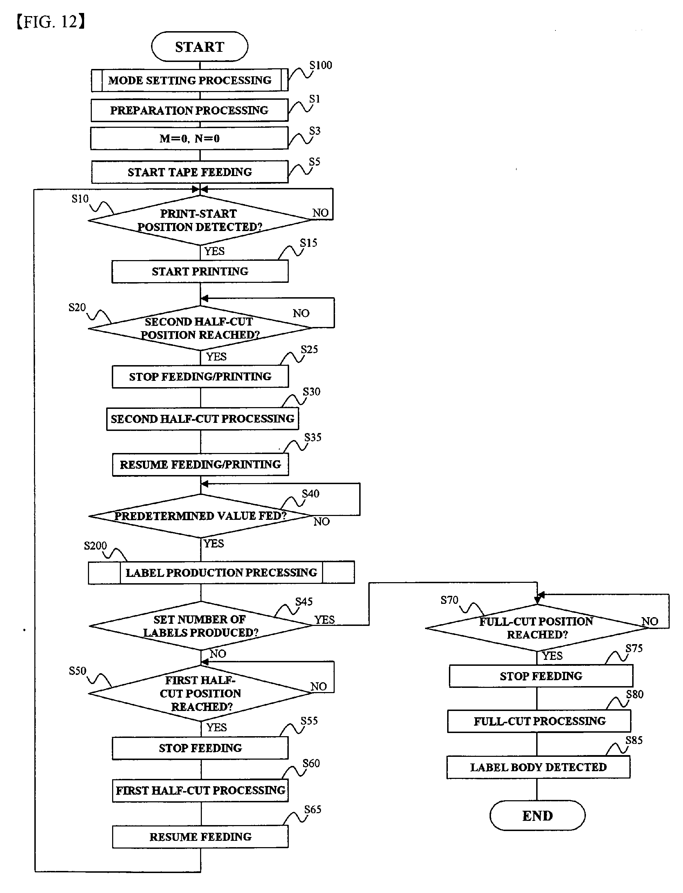

In the label body producing apparatus 1 constructed basically as above, the most distinctive characteristic of this embodiment is that the label body LT integrally provided with a plurality of labels including at least the RFID label T can be produced. This point will be described using Figs. 12 to 15. In Figs. 12 to 15, a case where the label body LT is comprised only by the RFID label T (not including the ordinary label L) as in the example shown in the above-mentioned Fig. 9 is used for description.

Fig. 12 is a flowchart illustrating a control procedure executed by the control circuit 110 of the label body producing apparatus 1.

In Fig. 12, when predetermined RFID label production operation is carried out by the label body producing apparatus 1 through the PC 118, this flow is started.

First, at Step S100, an operation signal from the PC 118 is inputted (through the communication line NW and the input/output interface 113), and mode setting processing for setting the production mode of the label body based on this operation signal is carried out. In this mode setting processing, in addition to the label body production mode, printing data, tag writing data, the number of constituting labels and the like are set (See Fig. 13, which will be described later, for detail).

At the next Step S1, based on the label body production mode, printing data, the number of constituting labels and the like set at the mode setting processing at the Step S100, preparation processing is executed for setting the first/second half-cut positions, full-cut position, print end position and the like. At this time, the first/second half-cut positions are set so that they do not overlap the position of the RFID circuit element To. Also, since the length of each label constituting the label body is fixed to the length equal to the arrangement interval between the RFID circuit elements To in the base tape 101, the full-cut position is set to any of the fixed positions corresponding to each label.

Next, at Step S3, variables M, N for counting the number of communication retry times (number of access retry times) when there is no reply form the RFID circuit element To at communication from the loop antenna LC to the RFID circuit element To are initialized to 0.

After that, the program goes on to Step S5, where a control signal is outputted to the feeding motor drive circuit 121 through the input/output interface 113, and by the driving force of the feeding motor 121, the feeding roller 27 and the ribbon take-up roller 106 are rotated/driven. Moreover, a control signal is outputted to the tape discharge motor 65 through the tape discharge motor drive circuit 123 so as to rotate/drive the feeding roller 51. By them, the base tape 101 is fed out of the first roll 102 and supplied to the feeding roller 27, while the cover film 103 is fed out of the second roll 104, and the base tape 101 and the cover film 103 are bonded by the feeding roller 27 and a sub roller 28 to be integrated and formed as the tag label tape 109 with print, which is fed out from the cartridge outside direction to the label body producing apparatus outside direction.

After that, at Step S10, the identification mark PM provided at the tag label tape 109 with print is detected by the mark sensor 127, and it is determined if the detection signal has been inputted or not from the mark sensor 127 through the interface 113 (in other words, if the cover film 103 has reached the print start position by the print head 23). This procedure is repeated till the identification mark PM is detected and the determination is satisfied, and when being detected, the determination is satisfied and the program goes on to the subsequent Step S15.

At Step S15, a control signal is outputted to the print-head drive circuit 120 through the input/output interface 113, the print head 23 is electrified, and printing of the label print R is started such as characters, symbols, barcodes and the like corresponding to the printing data to the corresponding tag label T in the plurality of RFID labels T constituting the label body LT produced at Step S100.

After that, at Step S20, it is determined if the tag label tape 109 with print has been fed to the second half-cut position for the corresponding tag label T in the plurality of RFID labels T constituting the label body LT set at the preceding Step S1 (in other words, if the tag label tape 109 with print has reached the position where the half cutter 34 of the half cut mechanism 35 is opposed to the second half-cut line HC2 of the corresponding tag label T set by at Step S1). The determination at this time can be made by detecting a feeding distance after the identification mark PM of the base tape 101 is detected at Step S10 by a predetermined known method (such as counting the number of pulses outputted by the feeding motor drive circuit 121 driving the feeding motor 119, which is a pulse motor). This procedure is repeated till the second half-cut position is reached and the determination is satisfied, and when being reached, the determination is satisfied and the program goes on to the subsequent Step S25.

At Step S25, a control signal is outputted to the feeding motor drive circuit 121 and the tape discharge motor drive circuit 123 through the input/output interface 113, driving of the feeding motor 119 and the tape discharge motor 65 is stopped, and rotation of the feeding roller 27, the ribbon take-up roller 106 and the feeding roller 51 is stopped. At a result, during the course when the tag label tape 109 with print fed out of the cartridge 7 is moved in the discharge direction, in the state where the half cutter 34 of the half cut mechanism 35 is opposed to the second half-cut line HC2 for the corresponding tag label T set at Step S1, feeding-out of the base tape 101 from the first roll 102, feeding-out of the cover film 103 from the second roll 104, and feeding of the tag label tape 109 with print are stopped. Also, at this time, a control signal is outputted to the print-head drive circuit 120 through the input/output interface 113, electricity to the print head 23 is stopped, and printing of the label print R is stopped (printing interrupted).

After that, at Step S30, a control signal is outputted to the half-cutter motor drive circuit 128 through the input/output interface 113 so as to drive the half cut motor 129, by which the half cutter 34 is rotated, and the cover film 103, the adhesive layer 101a, the base film 101b, and the adhesive layer 101c of the tag label tape 109 with print are cut and the second half-cut processing forming the second half-cut line HC2 is executed.

The program goes on to Step S35, where the feeding roller 27, the ribbon take-up roller 106, and the feeding roller 51 are rotated/driven similarly to Step S5 so as to resume feeding of the tag label tape 109 with print, and the print head 23 is electrified as in Step S15 so as to resume printing of the label print R.

After that, at Step S40, it is determined if the tag label tape 109 with print which is being fed has been fed by a predetermined value (feeding distance that the RFID circuit element To of the corresponding tag label T of the plurality of RFID labels T constituting the label body LT reaches the loop antenna LC, for example). The feeding distance determination this time can be also made by counting the number of pulses outputted by the feeding motor drive circuit 121 driving the feeding motor 119, which is a pulse motor, similarly to Step S20.

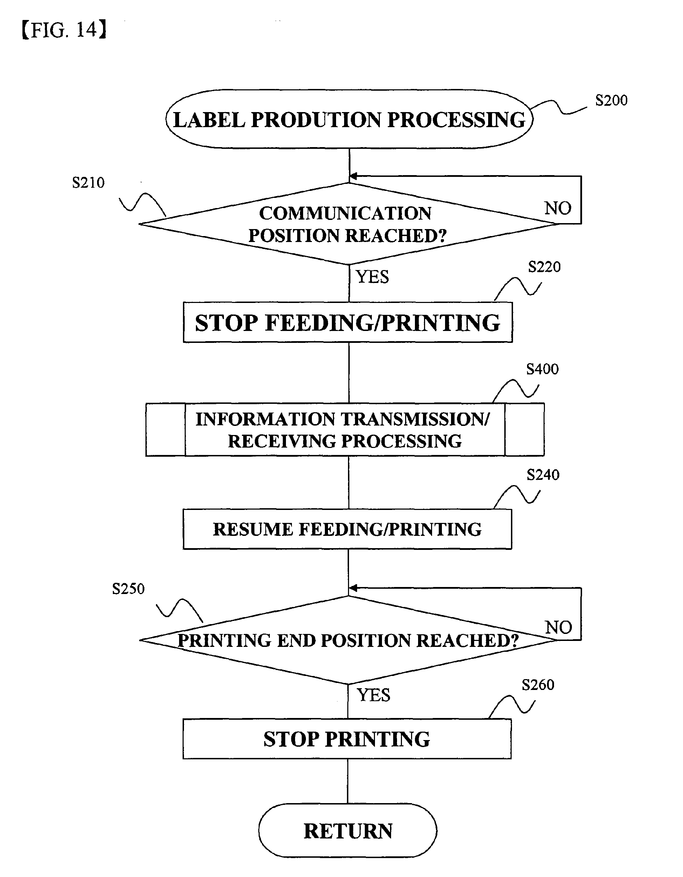

At the subsequent Step S200, label production processing is executed. That is, when feeding is completed to the communication position of the RFID circuit element To (position where the RFID circuit element To of the corresponding RFID label T is opposed to the loop antenna LC), feeding and printing are stopped, information transmission/receiving is carried out with respect to the RFID circuit element To of the corresponding tag label T of the plurality of RFID labels T constituting the label LT, the feeding and printing are resumed after that so as to complete print, and the corresponding RFID label T is formed (for detail, see Fig. 14, which will be described later).

When Step S200 is finished as mentioned above, the program goes on to Step S45. At Step S45, it is first determined if the number of RFID labels T set at the preceding Step S100 has been formed or not (that is, the three RFID labels T1, T2, T3 in the example shown in Fig. 9 have been formed or not). If not being completed, the determination is not satisfied, and the program goes on to the subsequent Step S50 (At this time, feeding of the tag label tape 109 with print has been resumed at Step S200).

At Step S50, similarly to Step S20, it is determined if the tag label tape 109 with print has been fed to the first half-cut position for the corresponding tag label in the plurality of RFID labels T constituting the label body LT set at the preceding Step S1 (in other words, if the tag label tape 109 with print has reached the position where the half cutter 34 of the half cut mechanism 35 is opposed to the first half-cut line HC1 of the RFID label T set at Step S1). This procedure is repeated till the first half-cut position is reached and the determination is satisfied, and when being reached, the determination is satisfied and the program goes on to the subsequent Step S55.

At Step S55, a control signal is outputted to the feeding motor drive circuit 121 and the tape discharge motor drive circuit 123 through the input/output interface 113, driving of the feeding motor 119 and the tape discharge motor 65 is stopped, and rotation of the feeding roller 27, the ribbon take-up roller 106, and the feeding roller 51 is stopped. At a result, during the course when the tag label tape 109 with print fed out of the cartridge 7 is moved in the discharge direction, in the state where the half cutter 34 of the half cut mechanism 35 is opposed to the first half-cut line HC1 of the corresponding RFID label T set at Step S1, feeding-out of the base tape 101 form the first roll 102, feeding-out of the cover film 103 from the second roll 104, and feeding of the tag label tape 109 with print are stopped.

At the subsequent Step S60, a control signal is outputted to the half-cutter motor drive circuit 128 through the input/output interface 113 so as to drive the half cutter motor 129, by which the half cutter 34 is rotated, and the cover film 103, the adhesive layer 101a, the base film 101b, and the adhesive layer 101c of the tag label tape 109 with print are cut and the first half-cut processing forming the first half-cut line HC1 is executed.

At the subsequent Step S65, the feeding roller 27, the ribbon take-up roller 106, and the feeding roller 51 are rotated/driven so as to resume feeding of the tag label tape 109 with print. After that, the program returns to the preceding Step S10.

On the other hand, at Step S45, if formation of the set number of RFID labels T is finished, the determination is satisfied and the program goes on to the subsequent Step S70 (at this time, feeding of the tag label tape 109 with print has been resumed at Step S200). At Step S70, it is determined if the tag label tape 109 with print has been fed to the full-cut position set at the preceding Step S1 or not (in other words, if the tag label tape 109 with print has reached the position where the movable blade 41 of the cutting mechanism 15 is opposed to the cut line CL). The determination at this time may be also made by detecting the feeding distance after the identification mark PM of the base tape 101 is detected at Step S10 by a predetermined known method, for example (by counting the number of pulses outputted by the feeding motor drive circuit 121 driving the feeding motor 119, which is a pulse motor). This procedure is repeated till the full-cut position is reached and the determination is satisfied, and when being reached, the determination is satisfied and the program goes on to the subsequent Step S75.

At Step S75, similarly to Step S25, rotation of the feeding roller 27, the ribbon take-up roller 106, and the feeding roller 51 is stopped and the feeding of the tag label tape 109 with print is stopped. At a result, in the state where the moving blade 41 of the cutting mechanism 15 is opposed to the cut ling CL set at Step S1, feeding-out of the base tape 101 from the first roll 102, feeding-out of the cover film 103 from the second roll 104, and feeding of the tag label tape 109 with print are stopped.

After that, the full-cut processing is carried out at Step S80 that a control signal is outputted to the cutter motor drive circuit 122 so as to drive the cutter motor 43, the movable blade 41 of the cutting mechanism 15 is rotated, and the cover film 103, the adhesive layer 101a, the base film 101b, the adhesive layer 101c, and the separation sheet 101d of the tag label tape 109 with print are all cut away (separated) so as to form the cut line CL. The label body LT in the label state is cut away from the tag label tape 109 with print by the separation by the cutting mechanism 15.

After that, the program goes on to Step S85, a control signal is outputted to the tape discharge motor drive circuit 123 through the input/output interface 113 so as to resume the driving of the tape discharge motor 65, and the feeding roller 51 is rotated. At a result, the feeding by the feeding roller 51 is started, the label body LT produced in the label state at Step S80 is fed toward the label discharge port 11 and discharged from the label discharge port 11 to outside of the label body producing apparatus 1, by which this flow is finished.

By the above control, the corresponding RFID tag information is written in (or read from) the RFID circuit element To of RFID labels T constituting the label body LT while Step S10 to Step S65 are repeated, corresponding predetermined print is applied, and when the set number of RFID labels T are formed, the determination at Step S45 is satisfied and the program goes on to Step S70, where the full-cut is executed so that the label-state label body LT having the plurality of RFID labels T is produced.

Fig. 13 is a flowchart illustrating a detailed procedure of the above-mentioned Step S100. In this flow shown in Fig. 13, first, at Step S105, an operation signal from the PC 118 is inputted (through the communication line NW and the input/output interface 113), and it is determined if a plural label mode is inputted or not on the basis of this operation signal. If an operation signal corresponding to a single label mode is inputted by an operator, the determination is not satisfied but the program goes on to the subsequent Step S110, where the label body production mode is set to the single label mode. And at the subsequent Step S115, printing data corresponding to the printing information on the basis of the operation signal from the PC 118 is created, communication data corresponding to writing information into the RFID circuit element To is created on the basis of the operation signal, and this routine is finished. In this case, the above-mentioned control procedure shown in the Fig. 12 is executed after that, and the label body LT having a single RFID label T is produced.

On the other hand, at the preceding Step S105, if the operation signal corresponding to the plural label mode is inputted by the operator, the determination is satisfied and the program goes on to the subsequent Step S120.

At Step S120, an operation signal from the PC 118 is inputted (through the communication line NW and the input/output interface 113), and it is determined if a serial printing is to be done or not on the basis of this operation signal. The serial printing refers to printing of serial numbers on each label constituting the label body LT, for example. The serial printing is not limited to serial numbers but includes serial printing having predetermined regularity such as "ABC", "BCD", "CDE" and the like. If the operation signal not to make serial printing is inputted by the operator, the determination is not satisfied but the program goes on to the subsequent Step S125.

At Step S125, an operation signal from the PC 118 is inputted (through the communication line NW and the input/output interface 113), and it is determined if the printing contents of the plurality of labels constituting the label body LT are substantially the same or not on the basis of the operation signal. If the operation signal indicating that the printing contents are substantially the same is inputted by the operator, the determination is not satisfied but the program goes on to the subsequent Step S130.

At Step S130, an operation signal from the PC 118 is inputted (through the communication line NW and the input/output interface 113), and it is determined if the tag writing contents for the RFID circuit element To of the plurality of labels constituting the label body LT are substantially the same or not on the basis of the operation signal. If the operation signal indicating that the tag writing contents are substantially the same is inputted by the operator, the determination is not satisfied but the program goes on to the subsequent Step S135.

At Step S135, the label body production mode is set to the plural label mode 1 that the printing contents of the plurality of labels constituting the label body LT and writing contents by wireless communication are substantially the same.

At the subsequent Step S140, printing data corresponding to the printing information on the basis of the operation signal from the PC 118 (1 type of data in this case) is created, and communication data corresponding to the writing information for the RFID circuit element To on the basis of the operation signal (1 type of data in this case) is also created.

At the subsequent Step S145, an operation signal from the PC 118 is inputted (through the communication line NW and the input/output interface 113), and the number of the plurality of labels constituting the label body LT is set on the basis of the operation signal. And this routine is finished.

At the preceding Step S130, if the operation signal indicating that the tag writing contents are not substantially the same is inputted by the operator, the determination is not satisfied but the program goes on to Step S150.

At Step S150, the label body production mode is set to the plural label mode 2 that the printing contents of the plurality of labels constituting the label body LT are substantially the same and the writing contents by wireless communication are substantially different.

At the subsequent Step S155, printing data corresponding to the printing information on the basis of the operation signal from the PC 118 (1 type of data in this case) is created, and communication data corresponding to the writing information to the RFID circuit element To on the basis of the operation signal (plural types of data in this case) is also created.

At the subsequent Step S160, on the basis of the plurality of types of communication data set at Step S155, the number of the plurality of labels constituting the label body LT is set(in this case, the number of types of communication data is set to the number of labels). And this routine is finished.

At the preceding Step S125, if the operation signal indicating that the printing contents are not substantially the same is inputted by the operator, the determination is not satisfied but the program goes on to Step S165.

At Step S165, an operation signal from the PC 118 is inputted (through the communication line NW and the input/output interface 113) and it is determined if the tag writing contents for the RFID circuit element of the plurality of labels constituting the label body LT are substantially the same on the basis of the operation signal. If the operation signal indicating that the tag writing contents are substantially the same is inputted by the operator, the determination is satisfied and the program goes on to the subsequent Step S170.

At Step S170, the label body production mode is set to the plural label mode 3 that the printing contents of the plurality of labels constituting the label body LT are substantially different and the writing contents by wireless communication are substantially same.

At the subsequent Step S173, printing data corresponding to the printing information on the basis of the operation signal from the PC 118 (plural types of data in this case) is created, and communication data corresponding to the writing information for the RFID circuit element To on the basis of the operation signal (1 type of data in this case) is also created.

At the subsequent Step S175, on the basis of the plurality of types of communication data set at Step S173, the number of the plurality of labels constituting the label body LT is set (in this case, the number of types of printing data is set to the number of labels). And this routine is finished.

At the preceding Step S165, if the operation signal indicating that the tag writing contents are not substantially the same is inputted by the operator, the determination is not satisfied but the program goes on to Step S180.

At Step S180, the label body production mode is set to the plural label mode 4 that the printing contents of the plurality of labels constituting the label body LT and the writing contents by wireless communication are substantially different.

At the subsequent Step S183, printing data corresponding to the printing information on the basis of the operation signal from the PC 118 (plural types of data in this case) is created, and communication data corresponding to the writing information for the RFID circuit element To on the basis of the operation signal (plural type of data in this case) is also created.

At the subsequent Step S185, on the basis of the plurality of types of printing data and communication data set at Step S183, the number of the plurality of labels constituting the label body LT is set (in this case, the number of types of printing data and communication data is set to the number of labels). And this routine is finished.

At the preceding Step S120, if the operation signal indicating that serial printing is to be done is inputted by the operator, the determination is satisfied and the program goes on to Step S190.

At Step S190, an operation signal from the PC 118 is inputted (through the communication line NW and the input/output interface 113), and it is determined if the tag writing contents for the RFID circuit element To of the plurality of labels constituting the label body LT are substantially the same or not on the basis of the operation signal. If the operation signal indicating that the tag writing contents are substantially the same is inputted by the operator, the determination is satisfied and the program goes on to the subsequent Step S192.

At Step S192, the label body production mode is set to a plural label mode 5 that the printing contents of the plurality of labels constituting the label body LT are serial and the writing contents by wireless communication are substantially the same.

At the subsequent Step S193, printing data corresponding to the printing information on the basis of the operation signal from the PC 118 (plural types of data in series in this case) is created, serial data corresponding to the serial information including the regularity, the number and the like of the series is created, and communication data corresponding to the writing information for the RFID circuit element To on the basis of the operation signal (1 type of data in this case) is created.

At the subsequent Step S195, on the basis of the serial data crated at Step S193, the number of the plurality of labels constituting the label body LT is set (in this case, the number of series included in the serial data is set to the number of labels). And this routine is finished.

At the preceding Step S190, if the operation signal indicating that tag writing contents are not substantially the same is inputted by the operator, the determination is not satisfied but the program goes on to Step S1960.

At Step S196, the label body production mode is set to a plural label mode 6 that the printing contents of the plurality of labels constituting the label body LT are serial and the writing contents by wireless communication are substantially different.

At the subsequent Step S197, printing data corresponding to the printing information on the basis of the operation signal from the PC 118 (plural types of data in series in this case) is created, serial data corresponding to the serial information including the regularity, the number and the like of the series is created, and communication data corresponding to the writing information for the RFID circuit element To on the basis of the operation signal (plural types of data in this case) is created. Serial number ID may be used as the plurality of types of writing data.

After that, the program goes on to the above-mentioned Step S195, and on the basis of the serial data crated at Step S197, the number of the plurality of labels constituting the label body LT is set (in this case, the number of series included in the serial data is set to the number of labels). And this routine is finished.

The case where the information is written in the RFID tag circuit element To of the labels constituting the label body LT so as to form each label and the label body LT is produced by that was described, but not limited to this, when the label body LT is produced by forming each label by corresponding print, while the RFID tag information is read out of the read-only RFID circuit element To in which predetermined RFID tag information is unrewritably stored in advance, the communication data creation procedure of Steps S115, S140, S155, S173, S183, S193 and S197 may be omitted.

Fig. 14 is a flowchart illustrating a detailed procedure of the above-mentioned Step S200. In the flow shown in Fig. 14, first, at Step S210, it is determined if the tag label tape 109 with print has been fed to the above-mentioned communication position with the loop antenna LC. The determination at this time may be also made by detecting the feeding distance after the identification mark PM of the base tape 101 is detected at Step S10 by a predetermined known method similarly to the above-mentioned Step S20 in Fig. 12 and the like, for example. This procedure is repeated till the communication position is reached and the determination is satisfied, and when being reached the determination is satisfied and the program goes on to the subsequent Step S220.

At Step S220, similarly to Step S25, rotation of the feeding roller 27, the ribbon take-up roller 106, and the feeding roller 51 is stopped and the feeding of the tag label tape 109 with print is stopped in the state where the loop antenna LC is substantially opposed to the RFID circuit element To of the corresponding tag label T in the plurality of RFID labels T constituting the label body LT. Also, electricity to the print head 23 is stopped, and the printing of the label print R is stopped (interrupted).

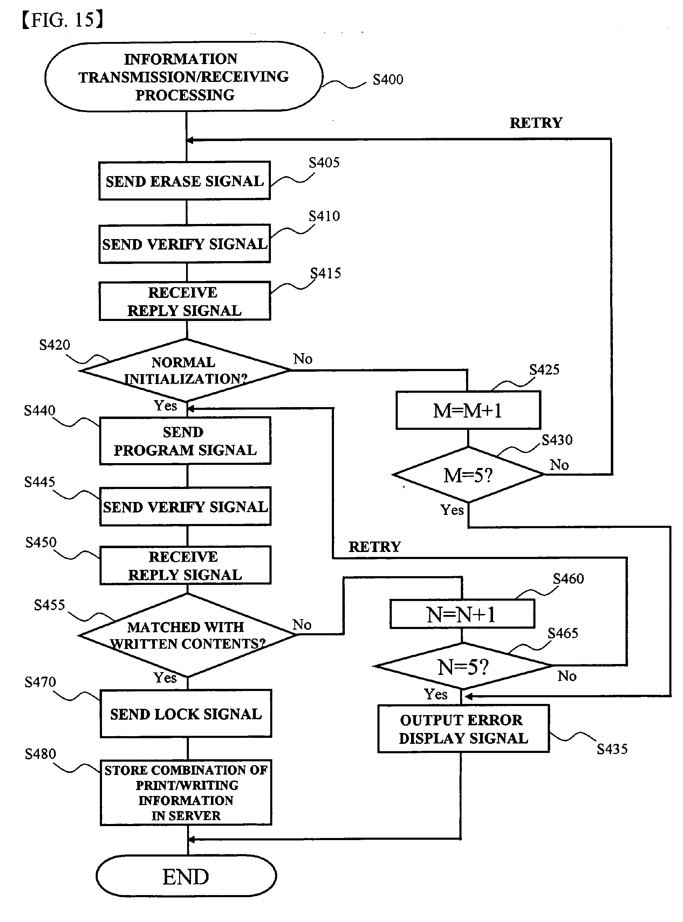

After that, the program goes on to Step S400, information transmission/receiving processing is carried out (for detail, see Fig. 15, which will be described later) that information is transmitted/received by wireless communication between the antenna LC and the RFID tag circuit element To and information created at Step S100 in Fig. 12 is written in the IC circuit part 151 of the RFID circuit element To.

AT the subsequent Step S240, similarly to Step S35 in Fig. 12, the feeding roller 27, the ribbon take-up roller 106, and the feeding roller 51 is rotated/driven so as to resume feeding of the tag label tape 109 with print, the print head 23 is electrified and the printing of the label print R is resumed.

After that, the program goes on to Step S250, and it is determined if the tag label tape 109 with print has been fed to the printing end position (calculated at Step S1 in Fig. 12) or not. The determination at this time may be also made by detecting the feeding distance after the identification mark PM of the base tape 101 is detected at Step S10 by a predetermined known method similarly to the above. This procedure is repeated till the printing end position is reached and the determination is satisfied, and when being reached the determination is satisfied and the program goes on to the subsequent Step S260.

At Step S260, similarly to Step S25 in Fig. 12, electricity to the print head 23 is stopped, and printing of the label print R is stopped. At a result, printing of the label print R on the print area S is completed. At a result, this routine is finished.

Fig. 15 is a flowchart illustrating a detailed procedure of the above-mentioned Step S400. In this example, information writing is used for description in the above-mentioned information writing and information reading.

In the flow shown in Fig. 15, first at Step S405, a control signal is outputted to the above-mentioned transmitting circuit 306 through the input/output interface 113, and the carrier wave given predetermined modulation is sent to the RFID circuit element To as writing target through the loop antenna LC as an "Erase" signal for initializing information stored in the memory portion 157 of the RFID circuit element To. At a result, the memory portion 157 of the RFID circuit element To is initialized.

Next, at Step S410, a control signal is outputted to the transmitting circuit 306 through the input/output interface 113, and the carrier wave given predetermined modulation is sent to the RFID circuit element To as writing target through the loop antenna LC as a "Verify" signal for verifying contents of the memory portion 157 of the RFID circuit element To and a reply is prompted.

After that, at Step S415, a reply signal sent from the RFID circuit element To as writing target in response to the "Verify" signal is received through the loop antenna LC and taken in through the receiving circuit 307 and the input/output interface 113.

Next, at Step S420, on the basis of the received reply signal, information in the memory portion 157 of the RFID circuit element To is verified so as to determine if the memory portion 157 is normally initialized.

If the determination is not satisfied, the program goes on to Step S425, where 1 is added to M, and it is determined if M = 5 at Step S430. In the case of M ≤ 4, the determination is not satisfied but the program returns to Step S405 and the same procedure is repeated. In the case of M = 5, the program goes on to Step S435, where an error display signal is outputted to the PC 118 through the input/output interface 113 and the communication line NW so that corresponding writing failure (error) display is made, and this routine is finished. In this way, even if initialization is not successful, retry is made up to 5 times.

If the determination at Step S420 is satisfied, the program goes on to Step S440, where a control signal is outputted to the transmitting circuit 306, and the carrier wave given predetermined modulation is sent to the RFID circuit element To of an information writing target through the loop antenna LC as a "Program" signal for writing desired data in the memory portion 157 and the information is written.

After that, at Step S445, a control signal is outputted to the transmitting circuit 306, the carrier wave given predetermined modulation as the "Verify" signal is sent to the RFID circuit element To of an information writing target through the loop antenna LC and a reply is prompted. After that, at Step S450, the reply signal sent from the RFID circuit element To as writing target in response to the "Verify" signal is received through the loop antenna LC and taken in by the receiving circuit 307 and the input/output interface 113.

Next, at Step S455, on the basis of the received reply signal, the information stored in the memory portion 157 of the RFID circuit element To is verified and it is determined if the predetermined information sent as above is normally stored in the memory portion 157 or not using a known error detection code (CRC code: Cyclic Redundancy Check or the like).

If the determination is not satisfied, the program returns to Step S460, where 1 is added to N, and it is determined at Step S465 if N = 5 or not. In the case of N≤ 4, the determination is not satisfied and the program returns to Step S440, where the same procedure is repeated. In the case of N = 5, the program goes on to Step S435, where writing failure (error) display is made, and this routine is finished. In this way, even if information writing is not successful, retry is made up to 5 times.

If the determination at Step S455 is satisfied, the program goes on to Step S470, where a control signal is outputted to the transmitting circuit 306, and the carrier wave given predetermined modulation as a "Lock" signal is sent to the RFID circuit element To as writing target through the loop antenna LC so as to prohibit new information writing in the RFID circuit element To. At a result, writing of the RFID tag information in the RFID circuit element To as writing target is finished.

After that, the program goes on to Step S480, and combination of the information written in the RFID circuit element To at Step S440 and the print information of the label print R already printed on the print area S by the print head 23 in correspondence with that is outputted through the input/output interface 113 and the communication line NW and stored in the information server IS and the route server RS. This stored data is stored/held in the database of each of the servers IS, RS so that it can be referred to by the PC 118 as necessary, for example. At a result, this routine is finished.

In the label body producing apparatus 1 of this embodiment configured as above, the predetermined label print R is applied by the print head 23 on the cover film 103 of the corresponding label in the plurality of labels constituting the label body LT, and this cover film 103 and the base tape 101 fed out of the first roll 102 are bonded and integrated by the feeding roller 27 and the pressure roller 28 and formed as the tag label tape 109 with print. With respect to the RFID label device To provided at the printed label tape 109, information is sent/received in a non-contact manner by the loop antenna LC, information reading or writing is executed and the set number of labels are formed, and then, the printed label tape 109 is cut by the cutting mechanism 15 to a predetermined length so as to produce the label body LT.

In this embodiment, the label body LT produced in this way is constructed as a label body integrally provided with a plurality of labels including the RFID label T provided with the RFID circuit element To. At a result, since a plurality of relevant labels can be handled in the integrated manner, handling performance by users can be improved as compared with the case where the plurality of labels are simply produced in the individually separated state.

Also, particularly in this embodiment, in the formed label body LT, the plurality of RFID circuit elements To provided at the plurality of RFID labels T constituting the label body LT are arranged with substantially the equal interval in the label body longitudinal direction. At a result, the label body LT including the plurality of RFID labels T in which the positions of the RFID circuit elements To are arranged with substantially the equal interval can be produced. Also, since the positions of the RFID circuit elements To have the equal interval in this way, it becomes possible to align the end positions on one side of each RFID label T with an equal interval, which facilitates identification and separation of the RFID label at affixing.

Also, particularly in this embodiment, each label constituting the label body LT is connected to each other by the separation sheet 101d at the first half-cut line HC1 where the layers other than the separation sheet 101d (the adhesive layer 101a, the base film 101b and the adhesive layer 101c) are cut in the width direction. At a result, the labels are definitely separated from each other by the first half-cut line HC1, and while the shape/function as separate labels is substantially realized, the labels connected by the separation sheet 10d can be handled in the integrally collected state, which can improve handling performance by users.

Also, particularly in this embodiment, the label main body Ta with print and the blank portion Tb without print of each label constituting the label body LT are connected through the separation sheet 101d at the second half-cut line HC2 where the layers other than the separation sheet 101d are cut in the width direction. By forming the second half-cut line HC2 in each label in this way, separation of the separation sheet 101d by users can be made easy in each label. Also, the blank portion Tb not to be used can be separated from the label main body Ta with print.

Also, particularly in this embodiment, the identification mark PM for position detection is provided at portions corresponding to the plurality of RFID circuit elements To in the separation sheet 101d, respectively. At a result, by detecting the identification mark PM by the label body producing apparatus side, positioning or feeding control for printing start of the tag label tape 109 with print for forming the label body LT can be carried out with accuracy.

Also, particularly in this embodiment, each RFID label T constituting the label body LT is provided with the print corresponding to the information stored in the IC circuit part 151 of the RFID circuit element To in the print area S. At a result, the label body LT including the RFID label T with print on which the information is stored in the IC circuit part 151 and moreover, the print corresponding to it is applied can be formed.

Also, particularly in this embodiment, by setting the label body production mode to the plural label mode 1, and the label body LT in which substantially the same information is stored/held in the IC circuit part 151 of each RFID circuit element To of the plurality of RFID labels T and substantially the same information is printed on the print areas S of the plurality of RFID labels T can be produced. At a result, the label body LT provided with the plurality of RFID labels T with substantially the same print (provided in reproduction) can be produced. As a result, the reproduction can function as a spare or backup.

Also, particularly in this embodiment, by setting the label body production mode to the plural label mode 2, the label body LT in which substantially different information is stored/held in the IC circuit part 151 of each RFID circuit element To of the plurality of RFID labels T and substantially different information is printed on the print areas S of the plurality of RFID labels T can be produced. At a result, the label body LT provided with the RFID labels T with substantially the same common print and storing information of substantially different contents can be produced. As a result, it becomes possible to associate different stored information only with the print, which widens usages by users and improves convenience. Also, when predetermined information is divided and stored in each RFID circuit element To, their relevance and closeness become visually apparent from print, which is convenient.

Also, particularly in this embodiment, by setting the label body production mode to the plural label mode 3, the label body LT in which substantially the same information is stored/held in the IC circuit part 151 of each RFID circuit element To of the plurality of RFID labels T and substantially different information is printed on the print areas S of the plurality of RFID labels T can be produced. At a result, the label body LT in which substantially the same contents are stored and the plurality of RFID labels T with information of different contents printed can be produced. As a result, even the same stored information can be made visually distinctive by print, which widens usages by users and further improves convenience. Also, it becomes possible to produce the RFID label T as a spare or backup for a single RFID label T, and the status of a spare or backup can be visually displayed by print.

Also, particularly in this embodiment, by setting the label body production mode to the plural label mode 4, the label body LT in which substantially different information is stored/held in the IC circuit part 151 of each RFID circuit element To of the plurality of RFID labels T and substantially different information is printed on the print areas S of the plurality of RFID labels T can be produced. At a result, the label body LT integrally provided with the plurality of RFID labels T with substantially different storage contents and substantially different print can be produced. That is, when labels are continuously affixed to separate articles placed at a plurality of adjacent locations in a predetermined order or the like, it would be convenient even the plurality of different RFID labels are formed integrally, and they can be utilized in such a case to improve convenience.

In the above, an example is shown in which the label body is produced with the label body production mode set to the plural label mode 1 in Fig. 9, but production examples of the label body LT on the other production modes will be illustrated below.

Figs. 16A and 17A are top views illustrating an example of an appearance of the label body when the label body production mode is set to the plural label mode 2 in which the printing contents of the plurality of labels constituting the label body are substantially the same and the writing contents by wireless communication are substantially different. Also, Figs. 16B and 17B are views illustrating the contents stored in the RFID circuit element To of each label constituting the label body.

In Fig. 16A and Fig. 16B, on the back face of the cover film 103 of each of the RFID labels T1 to T3 constituting a label body LT2, the same label print R (characters of "ABCDEF" in this example) is printed, respectively. Also, in the RFID circuit element To of each of the RFID labels T1 to T3, different ID, that is, ID123 indicating a place 1 is stored in the RFID label T1, ID 234 indicating a place 2 in the RFID label T2, and ID345 indicating a place 3 in the RFID label T3, respectively. At a result, in the case where storage places of a plurality of books with the same title are different or the like, by producing the label body LT2 and affixing the RFID labels T1 to T3 to corresponding books, management of the storage place of each book becomes possible, which can improve handling performance by users in such a case.

Also, in Fig. 17A and Fig. 17B, on the back face of the cover film 103 of each of the RFID labels T1 to T3 constituting a label body LT2', the same label print R (characters of "ABCDEF" in this example) is printed, respectively. Also, in the RFID circuit element To of each of the RFID labels T1 to T3, different ID, that is, ID123 indicating a lot 1 (manufacture date 1) is stored in the RFID label T1, ID 123 indicating the lot 1 (manufacture date 1) in the RFID label T2, and ID234 indicating a lot 2 (manufacture date 2) in the RFID label T3, respectively. At a result, if there are a plurality of the same food products with different manufacture date, for example, by producing the label body LT2' and affixing each of the RFID labels T1 to T3 to the corresponding food products, management of the best-before date of each food product becomes possible, which can improve handling performance by users in such a case.

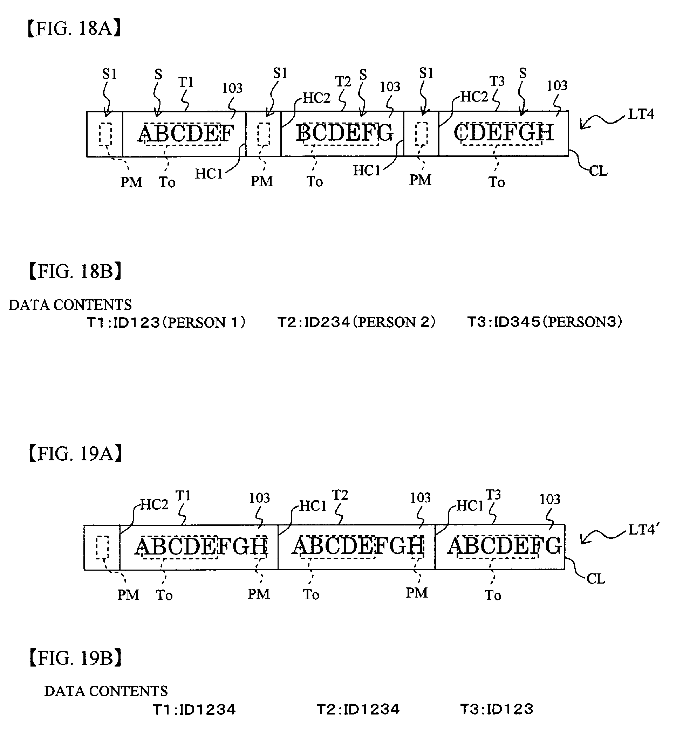

Figs. 18A and 19A are top views illustrating an example of an appearance of the label body when the label body production mode is set to the plural label mode 4 in which the printing contents of the plurality of labels constituting the label body and the writing contents by wireless communication are both substantially different. Also, Figs. 18B and 19B are diagrams illustrating the contents stored in the RFID circuit element To of each label constituting the label body.

In Fig. 18A and Fig 18B, on the back face of the cover film 103 of each of the RFID labels T1 to T3 constituting a label body LT4, the label prints R different from each other, that is, in this example, the characters of "ABCDEF" representing the name of a person 1 is printed on the label T1, the characters of "BCDEFG" representing the name of a person 2 on the label T2, and the characters of "CDEFGH" representing the name of a person 3 on the label T3, respectively. Also, in the RFID circuit element To of each of the RFID labels T1 to T3, different ID, that is, ID123 indicating personal information of the person 1 is stored in the RFID label T1, ID234 indicating the personal information of the person 2 in the RFID label T2, and ID345 indicating personal information of the person 3 in the RFID label T3, respectively. At a result, in the case of name plates or the like used in an office, for example, personal information of each person can be managed by producing the label body LT4 and affixing each RFID label T1 to T3 to the corresponding name plate, which can improve handling performance by users in such a case.

On the other hand, Fig. 19A and Fig. 19B are examples where the printing contents of each RFID label T is long such as "ABCDEFGH", and thus, the first RFID label T1 is formed so as to include the portion which was the blank area S1 of the second RFID label T2 in Fig. 18A. That is, the first half-cut line HC1 discriminating between the RFID labels T1 and T2 is provided at a position substantially corresponding to the second half-cut line HC2 discriminating the blank area S1 of the second RFID label T2 in Fig. 18A and the print area S. The same applies to the RFID label T2. However, in the last RFID label T3, since the length can not be sufficiently taken due to the fixed position of the cut line CL as mentioned above, the printing contents is changed to "ABCDEFG". On the RFID circuit element To of each of the RFID labels T1 to T3, different IDs, that is, ID1234 is stored in the RFID label T1, ID 1234 in the RFID label T2, and ID 123 in the RFID label T3, respectively, in this example. As above, the printing contents may be different only for the last RFID label T3 constituting the label body LT4'.

In the above, an example that the label body constituted by three labels was described, but not limited to this, the label body may be constituted by two labels or four or more labels.

The present invention is not limited to the above embodiments, but various variations are possible in a range without departing from its gist and technical idea. The variations will be described in order below.

### (1) When the label body includes an ordinary label not having the RFID circuit element To:

In the above embodiment, an example that the label body LT is constituted only by the RFID labels T was described, but not limited to this, the label body LT may include the ordinary label L not having the RFID circuit element To.

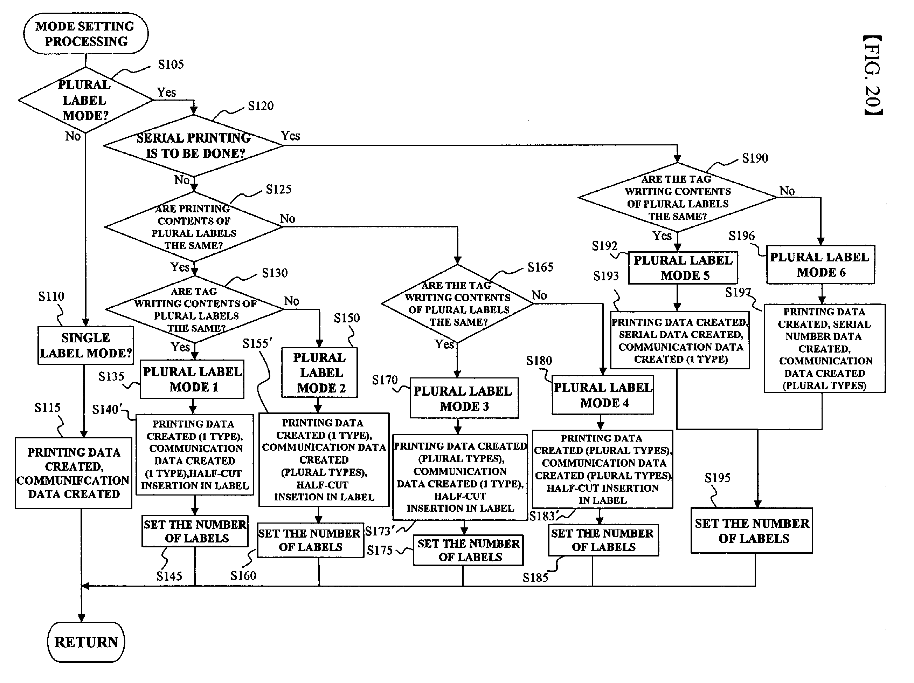

Fig. 20 is a flowchart illustrating a detailed procedure of Step S100' executed by a control circuit 110' (not shown) in this variation and corresponds to the above-mentioned Fig. 13. In Fig. 20, the same reference numerals are given to the equivalent procedure in Fig. 13 and description will be omitted.

In Fig. 20, a portion different from the above-mentioned Fig. 13 is that the procedure in Step S140, Step S155, Step 173 and Step 183 are substituted by the procedure in Step S140', Step S155', Step S173' and Step S183'. In Step S140', Step S155', Step S173' and Step S183', at creation of the printing data and communication data, an operation signal from the PC 118 is inputted (through the communication line NW and the input/output interface 113), and a first half-cut line HC1' for forming the ordinary label L is set at a predetermined position in the RFID label T on the basis of the operation signal. At a result, in the preparation processing in the subsequent Step S1 (See Fig. 12), the half-cut position corresponding to the first half-cut line HC1' set as above is set, the control procedure illustrated in Fig. 12 is executed after that, and the label body having the RFID label T and the ordinary label L is produced.

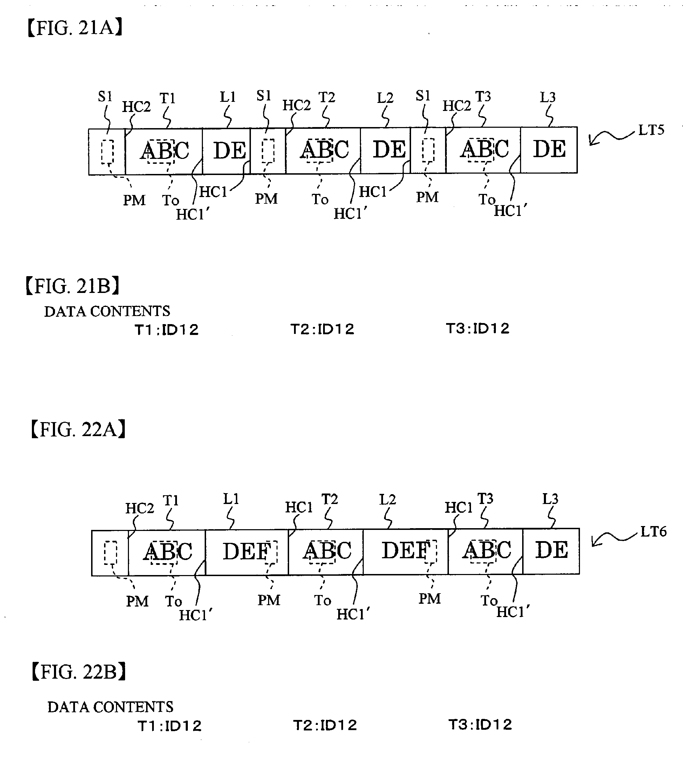

Fig. 21A is a top view illustrating an example of an appearance of the label body produced when the label body production ode is set to the plural label mode 1 by the above control, and Fig. 21B is a diagram illustrating the contents stored in the RFID circuit element To in each RFID label T constituting the label body.

In Fig. 21A and Fig. 21B, since the first half-cut line HC1' is provided between the print "ABC" and "DE" in each label constituting a label body LT5, the label body LT5 has three RFID labels T1 to T3 on which the print "ABC" is printed and three ordinary labels L1 to L3 on which the print "DE" is printed. Also, in the RFID circuit element To of each of the RFID labels T1 to T3, ID12, which is substantially the same as each other, is stored, respectively.

Fig. 22A is a top view illustrating an example of an appearance of the label body when the print is longer than that in Fig. 21 in the case where the label body production mode is set to the plural label mode 1 as in Fig. 21, and Fig. 22B is a diagram illustrating the contents stored in the RFID circuit element To of each of the RFID labels T constituting the label body, respectively.

In Fig. 22A and Fig. 22B, Since the first half-cut line HC1' is provided between the print "ABC" and "DEF" in each label constituting a label body LT6, the label body LT6 has three RFID labels T1 to T3 on which the print "ABC" is printed and three ordinary labels L1 to L3 on which the print "DEF" is printed. At this time, similarly to the above-mentioned Fig. 19, the first ordinary label L1 is formed so as to include the portion which was the blank area S1 of the second label (See Fig. 21). The same applies to the second ordinary label L2. Also, in the RFID circuit element To of each of the RFID labels T1 to T3, ID12, which is substantially the same as each other, is stored, respectively. Moreover, similarly to the label body LT4' shown in the above-mentioned Fig. 19, fewer characters are printed only on the last ordinary label L3 constituting the label body LT6.

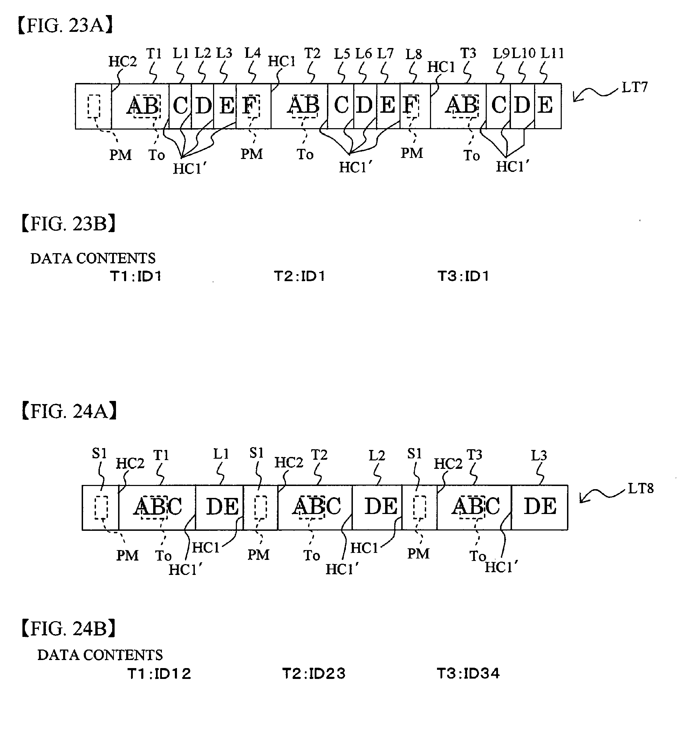

Fig. 23A is a top view illustrating an example of an appearance of the label body when more ordinary labels L are produced than in Fig. 22 in the case where the label body production mode is set to the plural label mode 1 as in Figs. 21 and 22, and Fig. 23B is a diagram illustrating the contents stored in the RFID circuit element To of each of the RFID labels T constituting the label body, respectively.

In Fig. 23A and Fig. 23B, since the first half-cut line HC1' is provided between the print "AB" and "C", "C" and "D", "D" and "E", and "E" and "F", respectively, in each label constituting the label body LT6, the label body LT6 has three RFID labels T1 to T3 on which the print "AB" is printed and eleven ordinary labels L1 to L11 on which the print "C", "D", "E" and "F" are printed, respectively. Also, in the RFID circuit element To of each of the RFID labels T1 to T3, ID1, which is substantially the same as each other, is stored, respectively. Similarly to the label body LT4' shown in the above-mentioned Fig. 19, the ordinary label on which "F" is printed is not formed only for the last label constituting the label body LT6.

Fig. 24A is a top view illustrating an example of an appearance of a label body when the label body production mode is set to the plural label mode 2, and Fig. 24B is a diagram illustrating the contents stored in the RFID circuit element To of each of the RFID labels T constituting the label body.

In Fig. 24A and Fig. 24B, since the first half-cut line HC1' is provided between the print "ABC" and "DE" in each label constituting a label body LT8, the label body LT8 has three RFID labels T1 to T3 on which the print "ABC" is printed and three ordinary labels L1 to L3 on which the print "DE" is printed. Also, in the RFID circuit element To of each of the RFID labels T1 to T3, ID12, ID23, and ID34, which are substantially different from each other, are stored, respectively.

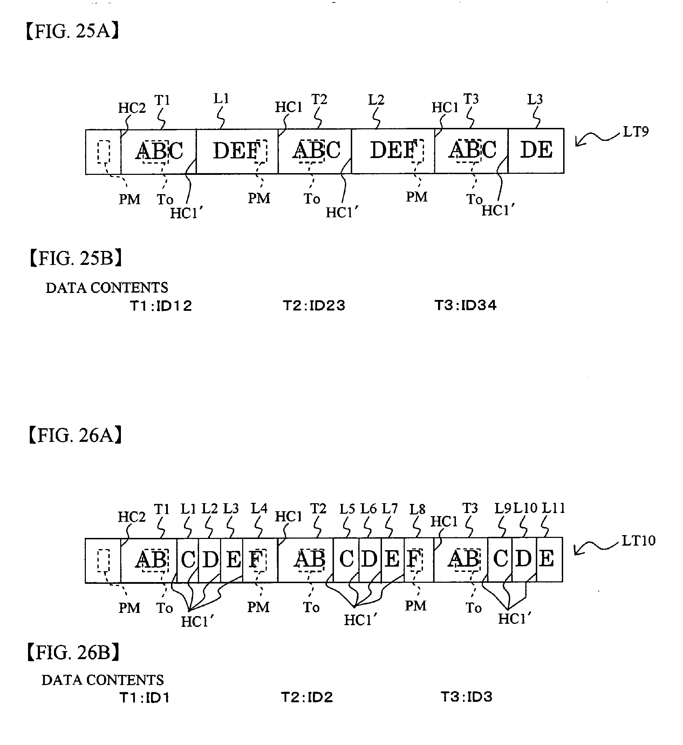

Fig. 25A is a top view illustrating an example of an appearance of the label body when the print is longer than that in Fig. 24 in the case where the label body production mode is set to the plural label mode 2 as in Fig. 24, and Fig. 25B is a diagram illustrating the contents stored in the RFID circuit element To of each of the RFID labels T constituting the label body, respectively.

Since the first half-cut line HC1' is provided between the print "ABC" and "DEF" in each label constituting a label body LT9 in Fig. 25A and Fig 25B, the label body LT9 has three RFID labels T1 to T3 on which the print "ABC" is printed and three ordinary labels L1 to L3 on which the print "DEF" is printed. At this time, similarly to the above-mentioned Fig. 19, the first ordinary label L1 is formed so as to include the portion which was the blank area S1 of the second label (See Fig. 24). The same applies to the second ordinary label L2. Also, in the RFID circuit element To of each of the RFID labels T1 to T3, ID12, ID23, and ID34, which are different from each other, are stored, respectively. Moreover, similarly to the label body LT4' shown in the above-mentioned Fig. 19, fewer characters are printed only on the last ordinary label L3 constituting the label body LT9.

Fig. 26A is a top view illustrating an example of an appearance of the label body when more ordinary labels L are produced than in Fig. 25 in the case where the label body production mode is set to the plural label mode 2 as in Figs. 24 and 25, and Fig. 26B is a diagram illustrating the contents stored in the RFID circuit element To of each of the RFID labels T constituting the label body, respectively.

In Fig. 26A and Fig. 26B, since the first half-cut line HC1' is provided between the print "AB" and "C", "C" and "D", "D" and "E", and "E" and "F", respectively, in each label constituting a label body LT10, the label body LT10 has three RFID labels T1 to T3 on which the print "AB" is printed and eleven ordinary labels L1 to L11 on which the print "C", "D", "E" and "F" are printed, respectively. Also, in the RFID circuit element To of each of the RFID labels T1 to T3, ID1, ID2, and ID3, which are different from each other, are stored, respectively. Similarly to the label body LT4' shown in the above-mentioned Fig. 19, the ordinary label on which "F" is printed is not formed only for the last label constituting the label body LT10.

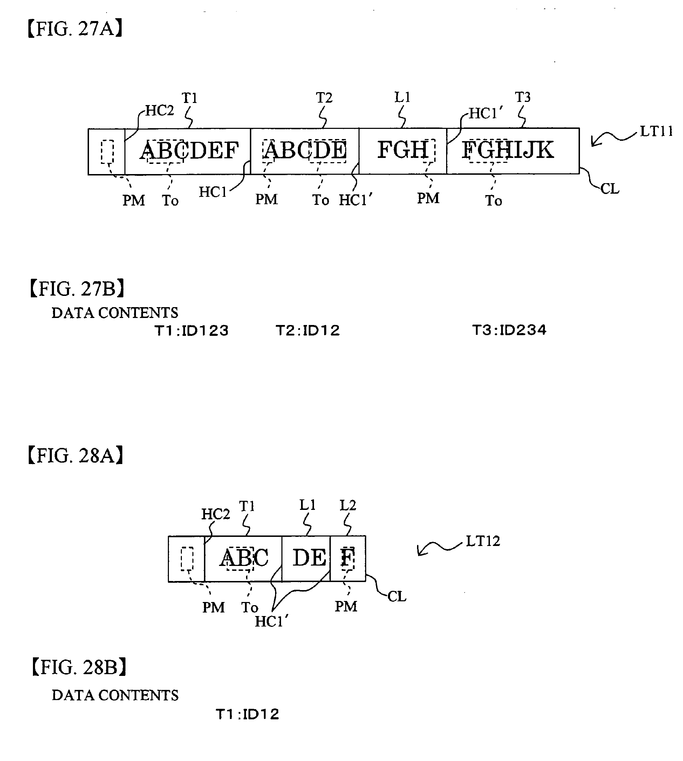

Fig. 27A is a top view illustrating an example of an appearance of a label body when the label body production mode is set to the plural label mode 4, and Fig. 27B is a diagram illustrating the contents stored in the RFID circuit element To of each of the RFID labels T constituting the label body.

In Fig. 27A and Fig. 27B, since the first half-cut line HC1' is provided between the print "ABCDE" and "FGH" and between "FGH" and "FGHIJK" in each label constituting a label body LT11, the label body LT11 has the RFID label T1 on which the print "ABCDEF" is printed, the RFID label T2 on which the print "ABCDE" is printed, the normal L1 on which the print "FGH" is printed, and the RFID label T3 on which the print "FGHIJK" is printed. Also, in the RFID circuit element To of each of the RFID labels T1 to T3, ID123, ID12, and ID234, which are different from each other, are stored, respectively. Moreover, fewer characters are printed only on the last ordinary label L3 constituting this label body LT11 as in the label body LT4' shown in the above-mentioned Fig. 19.

Fig. 28A is a top view illustrating an example of an appearance of a label body produced when the label body production mode is set to the plural label mode 3 (or the plural label mode 4), and Fig. 28B is a diagram illustrating the contents stored in the RFID circuit element To of an RFID label T1, one of the plurality of labels constituting the label body. This is an example that a label body constituted by a plurality of labels made of a single RFID label T and at least one ordinary label L is produced. In this case, since there is only one RFID label T on which information can be written, the label body production mode may be either the plural label mode 3 or the plural label mode 4.

In Fig. 28A and Fig. 28B, since the first half-cut line HC1' is provided between the print "ABC" and "DE" and between "DE" and "F" in the label constituting a label body LT12, the label body LT12 has a single RFID label T1 on which the print "ABC" is printed and two ordinary labels L1, L2 on which the prints "DE", "F" are printed. Also, ID12 is stored in the RFID circuit element To of the RFID label T1.

According to this variation configured as above, when not only the RFID label T provided with the RFID circuit element To but also the ordinary label L not provided with the RFID circuit element To is to be handled in association, the label body can be constituted integrally including the RFID label T and the ordinary label L, by which handling by users can be further improved.

### (2) When tape bonding is not to be carried out:

That is, this is a case where the present invention is applied to a cartridge for the label body producing apparatus for direct printing on the cover film provided on the tag tape, not that the print is applied on the cover film 103 separate from the base tape 101 provided with the RFID circuit element To and they are bonded together as mentioned in the above embodiment.

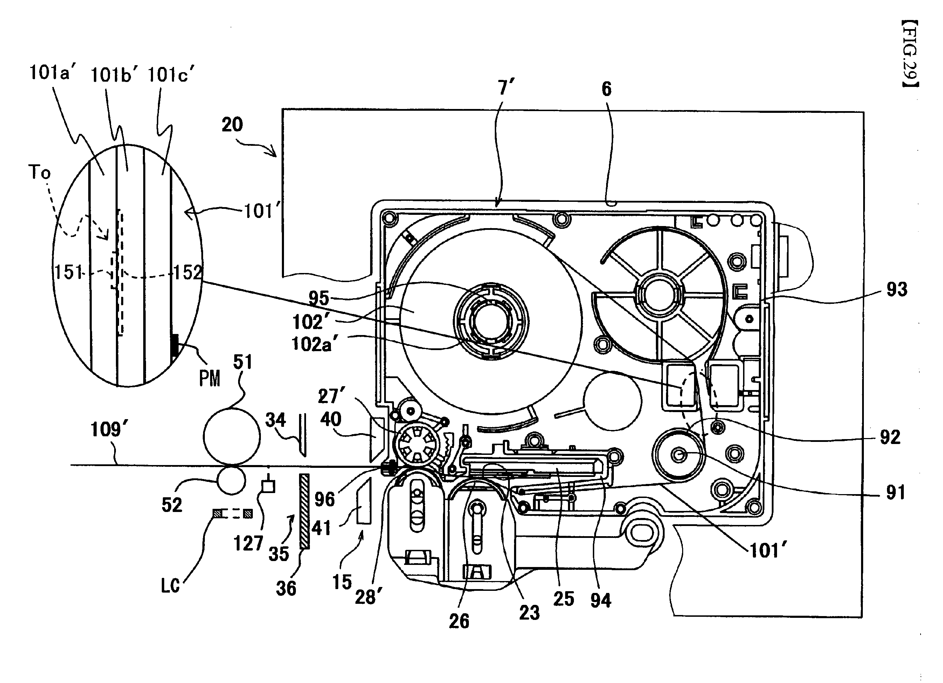

Fig. 29 is a plan view illustrating a detailed structure of a cartridge 7' of this variation and corresponds to the above-mentioned Fig. 4. The same reference numerals are given to the portions equivalent to those in Fig. 4 and the like and the description will be omitted as appropriate.

In Fig. 29, the cartridge 7' has a first roll 102' around which a thermal tape 101' is wound and a feeding roller 27' that feeds the thermal tape 101' in the direction outside the cartridge 7'.

The first roll 102' has the band-state transparent thermal tape 101' on which a plurality of the RFID circuit elements To are sequentially formed in the longitudinal direction wound around a reel member 102a'. The reel member 102a' is rotatably fitted by insertion and stored in a boss 95 installed upright on the bottom surface of the cartridge 7'.

The thermal tape 101' wound around the first roll 102' is in the three-layered structure in this example (See a partially enlarged view in Fig. 29) in which a cover film 101a' made of polyethylene terephthalate (PET) and the like having a thermal recording layer on the surface, an adhesive layer 101b' made of an appropriate adhesive, and a separation sheet 101c' are laminated from the side wound inside toward the opposite side.

On the back side of the cover film 101a', the loop antenna 152 constructed in the loop-coil shape that transmits/receives information is integrally provided in this example, the IC circuit part 151 is formed so as to be connected to it, and the RFID circuit element To is constituted by them. On the back side of the cover film 101a', the separation sheet 101c' is affixed to the cover film 101a' through the adhesive layer 101b', and on the surface of the separation sheet 101c', a predetermined identification mark (identification mark painted in black in this example. Alternatively, it may be a hole drilled and penetrating the thermal tape 101' by laser machining or the like as above) PM is provided at a predetermined position corresponding to each RFID circuit element To (a position further front from the tip end of the antenna 152 on the front in the feeding direction in this example) as in the above.

When the cartridge 7' is attached to the cartridge holder 6 and the roller holder 25 is moved from the separated position to the contact position, the thermal tape 101' is held between the print head 23 and the platen roller 26 and between the feeding roller 27' and a sub roller 28'. And the feeding roller 27', the sub roller 28' and the platen roller 26 are rotated in synchronization, and the thermal tape 101' is fed out of the first roll 102'.

The fed-out thermal tape 101' supplied from an opening portion 94 to the print head 23 on the downstream side in the feeding direction while being guided by a substantially cylindrical reel 92 rotatably fitted by insertion into a reel boss 91 installed upright on the cartridge bottom surface. The print head 23 has its plurality of heating elements electrified by the above-mentioned print-head drive circuit 120 (See Fig. 7), by which the label print R is printed on the surface of the cover film 101a' of the thermal tape 101' and formed as the tag label tape 109 with print' and then, fed out of the cartridge 7' from a discharge port 96.

After being fed out of the cartridge 7', an access (information reading/writing) of the IC circuit part 151 through the above-mentioned loop antenna LC is carried out. After that, it is only necessary to execute the feeding by the feeding roller 51, cutting by the cutting mechanism 15 and the like similarly to the above embodiments, and the description will be omitted.

The half cut unit 35 is different from those corresponding to the so-called laminate type described in Fig. 3 and the like. That is, in the construction described in Fig. 3 and the like, the cradle 36 (See Fig. 3) is located on the print head 23 side, while the half cutter 34 is on the platen roller 26 side. This is the construction for carrying out half-cut from the surface opposite to the separation sheet of the produced tape. However, when the thermal tape is used as in this variation (also when the ink ribbon is used in the type not using the laminate, which will be described later using Fig. 3030), the separation sheet is located on the side opposite to that of the laminate type. Therefore, in order to apply the half-cut to a portion other than the separation sheet, arrangement of the cradle 36 and the half cutter 34 is made opposite. That is, the half cutter 34 is located on the print head 23 side, while the cradle 36 on the platen roller 26 side.

The mark sensor 127 that detects the identification mark PM provided at the separation sheet 101c' is also different from those for the so-called laminate type described in Fig. 4 and the like, and it is provided on the pressure roller 52 side, not on the feeding roller 51 side.

In this variation, too, the same effect as those in the above embodiment can be obtained.

In the construction of the above variation, print is carried out only by heating of the print head 23 by using the thermal tape as the tag tape, not particularly using an ink ribbon or the like, but not limited to this, a normal ink ribbon may be used for print as in the above embodiment.

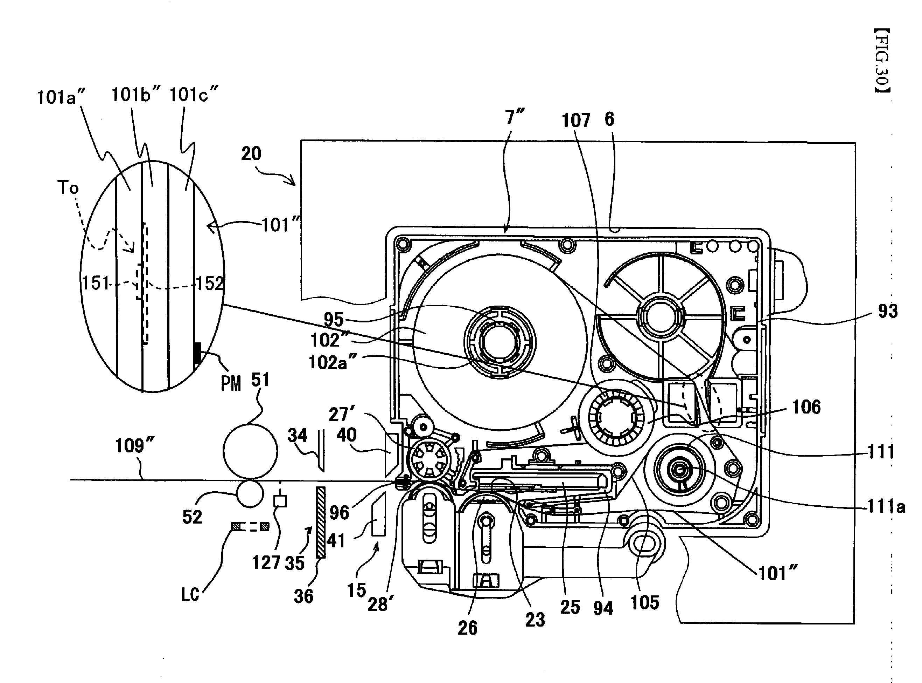

Fig. 30 is a plan view illustrating a detailed structure of a cartridge 7" of such a variation and corresponds to the above-mentioned Figs. 29 and 4. The same reference numerals are given to the portions equivalent to those in Figs. 29 and 4 and the like and the description will be omitted as appropriate.

In Fig. 30, the cartridge 7" has a first roll 102" around which a base tape 101" is wound.

The first roll 102" has the band-state transparent base tape 101" on which a plurality of the RFID circuit elements To are sequentially formed in the longitudinal direction wound around a reel member 102a " .

The base tape 101" wound around the first roll 102" is in the three-layered structure in this example (See a partially enlarged view in Fig. 30) in which a colored base film 101a" made of polyethylene terephthalate (PET) and the like, an adhesive layer 101b" made of an appropriate adhesive, and a separation sheet 101c" are laminated from the side wound inside toward the opposite side.

On the back side of the base film 101a'', the loop antenna 152 constructed in the loop-coil shape that transmits/receives information is integrally provided in this example, the IC circuit part 151 is formed so as to be connected to it, and the RFID circuit element To is constituted by them. On the back side of the base film 101a", the separation sheet 101c " is affixed to the base film 101a' ' through the adhesive layer 101b' '. On the surface of the separation sheet 101c' ', a predetermined identification mark (identification mark painted in black in this example. Alternatively, it may be a hole drilled and penetrating the base tape 101" by laser machining or the like as above) PM is provided at a predetermined position corresponding to each RFID circuit element To (a position further front from the tip end of the antenna 152 on the front in the feeding direction in this example) as in the above.

When the cartridge 7' is attached to the cartridge holder 6 and the roller holder 25 is moved from the separated position to the contact position, the base tape 101' ' and the ink ribbon 105 are held between the print head 23 and the platen roller 26 and between the feeding roller 27' and a sub roller 28'. And the feeding roller 27', the sub roller 28' and the platen roller 26 are rotated in synchronization, and the base tape 101'' is fed out of the first roll 102" .

On the other hand, at this time, the print head 23 has its plurality of heating elements electrified by the above-mentioned print-head drive circuit 120 (See Fig. 7), by which the label print R is printed on the surface of the base film 101a" of the base tape 101" and formed as the tag label tape 109 with print" and then, fed out of the cartridge 7".

After being fed out of the cartridge 7", an access (information reading/writing) of the IC circuit part 151 through the above-mentioned loop antenna LC is carried out. After that, it is only necessary to execute the feeding by the feeding roller 51, cutting by the cutting mechanism 15 and the like similarly to the above embodiments, and the description will be omitted. Also, the same as in the variation in the above-mentioned Fig. 29 applies to the half cut unit 35 and the mark sensor 127.

In this variation, too, the same effect as that in the above embodiments can be obtained.

### (3) Others

In the above, control at communication failure with the RFID circuit element To of the plurality of RFID labels T constituting the label body LT was not particularly described, but when the label body LT having the plurality of RFID labels T is to be produced by writing the similar information to that on the previous tag label T in the RFID label T as backup after a communication failure to the RFID label T and carrying out printing corresponding to the information, control may be made such that the subsequent printing/writing contents of the RFID label T are changed according to communication success/failure of the previous tag label T.

In the above, a loop antenna is used as the antenna LC on the device side and the antenna 152 on the RFID circuit element To side, and information transmission is carried out by magnetic induction (including electromagnetic induction, magnetic coupling and other non-contact induction through a magnetic field), but not limited to this, a dipole antenna, a patch antenna or the like may be used as the above two antennas so as to carry out information transmission/receiving by wave communication.

Also, in the above, an example was shown that the feeding of the tag label tape 109 with print is stopped at a predetermined position for writing of the RFID tag information, but not limited to this, the RFID tag information may be written in the moving tag label tape 109 with print.

Moreover, in the above, such a method is employed that the print is carried out on the cover film 103 separate from the base tape 101 provided with the RFID circuit element To and they are bonded together, but not limited to this, a method of carrying out the print on the cover film provided at the tag tape (of a type that bonding is not carried out) may be applied to the present invention. Furthermore, the present invention is not limited to the reading or writing of the RFID tag information from or into the IC circuit part 151 of the RFID circuit element To and carrying out the print for identifying the RFID circuit element To. The printing is not necessarily required but the present invention may be applied to those for reading or writing of the RFID tag information.

Moreover, in the above, an example was used for description that the base tape 101 is wound around the reel member 102a so as to constitute a roll, and the roll is arranged within the cartridge 7 so that the base tape 101 is fed out, but not limited to this. For example, the present invention is not limited to the cartridge 7 or the like detachably attached to the main body side of the label body producing apparatus 1, but the first roll 102 may be provided on the apparatus body side as an installed type or an integral type which can not be detached. The same effect can be also obtained in these cases.

The "Erase" signal, the "Verify" signal, the "Program" signal and the like used in the above shall comply with the specification formulated by EPC global. The EPC global is a non-profit corporation jointly established by International EAN Association, which is an international organization of distribution codes, and UCC (Uniformed Code Council), which is an U.S. distribution code organization. Signals complying with other standards will do as long as they serve the same functions.

Also, other than mentioned above, the above embodiments and methods of each of the variations may be combined for use as appropriate.

Though not specifically exemplified, the present invention should be put into practice with various changes made in a range not departing from its gist.

## Claims

1. A label body (LT; LT2; LT2'; LT4; LT4'; LT5; LT6; LT7; LT8; LT9; LT10; LT11; LT12) with a plurality of labels (T1, T2, T3; L1, L2, L3; L4, L5, L6, L7, L8, L9, L10, L11) formed integrally with each other, each of said plurality of labels (T1, T2, T3; L1, L2, L3; L4, L5, L6, L7, L8, L9, L10, L11) including label main body (T1a, T2a, T3a) with print to be affixed to an adhesion target,
wherein said plurality of labels (T1, T2, T3; L1, L2, L3; L4, L5, L6, L7, L8, L9, L10, L11) respectively includes at least one RFID label (T1, T2, T3) of RFID labels (T1, T2, T3) and ordinary labels (L1, L2, L3; L4, L5, L6, L7, L8, L9, L10, L11),
each of said RFID labels (T1, T2, T3) has an RFID circuit element (To) including an IC circuit part (151) that stores. information and a tag antenna (152) connected to said IC circuit part (151),
each of said ordinary labels (L1, L2, L3; L4, L5, L6, L7, L8, L9, L10, L11) does not have said RFID circuit element (To).

2. The label body (LT5; LT6; LT7; LT8; LT9; LT10; LT11; LT12) according to Claim 1,
wherein said plurality of labels (T1, T2, T3; L1, L2, L3; L4, L5, L6, L7, L8, L9, L10, L11) include plurality of RFID labels (T1, T2, T3) and at least one ordinary label (L1, L2, L3; L4, L5, L6, L7, L8, L9, L10, L11).

3. The label body (LT; LT2; LT2'; LT4; LT4'; LT5; LT6; LT7; LT8; LT9; LT10; LT11; LT12) according to Claim 1 or 2,
wherein said plurality of RFID labels (T1, T2, T3)are included, and
said plurality of RFID circuit elements (To) provided at said plurality of RFID labels (T1, T2, T3) are arranged in the longitudinal direction of said label body (LT; LT2; LT2'; LT4; LT4'; LT5; LT6; LT7; LT8; LT9; LT10; LT11; LT12) with substantially an equal interval.

4. The label body (LT; LT2; LT2'; LT4; LT4'; LT5; LT6; LT7; LT8; LT9; LT10; LT11; LT12) according to any one of claims 1 to 3,
wherein each of said plurality of labels (T1, T2, T3; L1, L2, L3; L4, L5, L6, L7, L8, L9, L10, L11) comprises a base layer (101b; 101a'; 101a"), an affixing adhesive layer (101c; 101b'; 101b'') that affixes said base layer (101b; 101a'; 101a'') to an adhesion target, and a separation material layer (101d; 101c'; 101c'') that covers said affixing adhesive layer (101c; 101b'; 101b"), and
each of said labels (T1, T2, T3; L1, L2, L3; L4, L5, L6, L7, L8, L9, L10, L11) is connected by said separation material layer (101d; 101c' ; 101c'') at a first half-cut portion (HC1; HCl') where the layers other than said separation material layer (101d; 101c'; 101c'') are cut in the width direction.

5. The label body (LT; LT2; LT2'; LT4; LT4'; LT5; LT6; LT7; LT8; LT9; LT10; LT11; LT12) according to Claim 4,
wherein each of said plurality of labels (T1, T2, T3; L1, L2, L3; L4, L5, L6, L7, L8, L9, L10, L11) comprises a print-receiving tape layer (103), on which predetermined pattern print is carried out and an bonding adhesive layer (101a) that bonds said print-receiving tape layer (103) to said base layer (101b).

6. The label body (LT; LT2; LT2'; LT4; LT4'; LT5; LT6; LT7; LT8; LT9; LT10; LT11; LT12) according to Claim 4 or 5,
wherein at least one of said RFID labels (T1, T2, T3) includes a blank portion (T1b, T2b, T3b) without print,
in the RFID label (T1, T2, T3), said label main body (T1a, T2a, T3a) with print and said blank portion (T1b, T2b, T3b) are connected via said separation material layer (101d; 101c' ; 101c") at a second half-cut portion (HC2) where the layers other than said separation material layer (101d; 101c'; 101c'') are cut in the width direction.

7. The label body (LT; LT2; LT2'; LT4; LT4' ; LT5 ; LT6; LT7; LT8 ; LT9; LT10; LT11; LT12) according to any one of claims 4 to 6,
wherein an identifier (PM) for position detection is provided at each portion corresponding to said plurality of RFID circuit elements (To) in said separation material layer (101d; 101c' ; 101c") .

8. The label body (LT; LT2; LT2'; LT4; LT4'; LT5; LT6; LT7; LT8; LT9; LT10; LT11; LT12) according to any one of claims 1 to 7,
wherein said RFID label (T1, T2, T3) includes a print corresponding to information stored in said IC circuit part (151) in a predetermined print area (S) of said label main body (T1a, T2a, T3a) with print.

9. The label body (LT; LT5; LT6; LT7) according to Claim 8,
wherein substantially the same information as each other is stored respectively in said IC circuit parts (151) of said plurality of RFID circuit elements (To) respectively provided at each of said plurality of RFID labels (T1, T2, T3), and
substantially the same information as each other is printed respectively on said print areas (S) provided at each of said plurality of RFID labels (T1, T2, T3).

10. The label body (LT; LT2; LT2'; LT8; LT9; LT10) according to Claim 8,
wherein information substantially different from each other is stored respectively in said IC circuit parts (151) of said plurality of RFID circuit elements (To) respectively provided at each of said plurality of RFID labels (T1, T2, T3), and
substantially the same information as each other is printed respectively on said print areas (S) provided at each of said plurality of RFID labels (T1, T2, T3).

11. The label body (LT; LT12) according to Claim 8,
wherein substantially the same information as each other is stored respectively in said IC circuit parts (151) of said plurality of RFID circuit elements (To) respectively provided at each of said plurality of RFID labels (T1, T2, T3), and
information substantially different from each other is printed respectively on said print areas (S) provided at each of said plurality of RFID labels (T1, T2, T3).

12. The label body (LT; LT4; LT4'; LT11) according to Claim 8,
wherein information substantially different from each other is stored respectively in said IC circuit parts (151) of said plurality of RFID circuit elements (To) respectively provided at each of said plurality of RFID labels (T1, T2, T3), and
information substantially different from each other is printed respectively on said print areas (S) provided at each of said plurality of RFID labels (T1, T2, T3).

13. A label body producing apparatus (1) that produces a label body (LT; LT2; LT2'; LT4; LT4'; LT5; LT6; LT7; LT8; LT9; LT10; LT11; LT12) with a plurality of labels (T1, T2, T3; L1, L2, L3; L4, L5, L6, L7, L8, L9, L10, L11) as claimed in claim 1, comprising:
feeding means (108) that feeds a tag tape (101; 101'; 101'') on which said RFID circuit element (To) is arranged;
printing means (23) that applies print on a print area (S) provided at said tag tape (101'; 101") or a print-receiving tape (103) to be bonded to said tag tape (101);
transmitting/receiving means (LC) that transmits/receives information by wireless communication with said RFID circuit element (To); and
a cutter (15) that cuts said tag tape (101; 101'; 101'').

14. The label body producing apparatus (1) according to Claim 13,
wherein said feeding means (108) feeds said tag tape (101; 101'; 101' ') having a base layer (101b; 101a'; 101a'') that attaches said RFID circuit element (To), an affixing adhesive layer (101c ; 101b' ; 101b' ') that affixes said base layer (101b; 101a' ; 101a' ') to an adhesion target, and a separation material layer (101d; 101c'; 101c'') that covers said affixing adhesive layer (101c; 101b'; 101b"),
said label body producing apparatus (1) further comprises half-cutting means (34) that cuts the layers other than said separation material layer (101d; 101c'; 101c'') in said tag tape (101; 101'; 101'') so as to form a half-cut portion (HC1, HC2; HC1'), and produces a label body (LT; LT2; LT2'; LT4; LT4'; LT5; LT6; LT7; LT8; LT9; LT10; LT11; LT12) with each of said plurality of labels (T1, T2, T3; L1, L2, L3; L4, L5, L6, L7, L8, L9, L10, L11) connected at said half-cut portion (HC1; HC1') via said separation material layer (101d; 101c'; 101c").

15. The label body producing apparatus (1) according to Claim 13 or 14,
wherein said printing means (23) carries out print corresponding to information written by said transmitting/receiving means (LC) in said IC circuit part (151) in a predetermined print area (S) of said label main body (T1a, T2a, T3a) with print of said RFID label (T1, T2, T3).

16. The label body producing apparatus (1) according to Claim 15,
wherein said label body producing apparatus (1) further comprises first coordination control means (S135, S140, S145; S135, S140', S145) that coordinates control of said transmitting/receiving means (LC) and said printing means (23) in the manner that said transmitting/receiving means (LC) writes substantially the same information as each other respectively in said IC circuit parts (151) of said plurality of RFID circuit elements (To) respectively provided at each of said plurality of RFID labels (T1, T2, T3), and said printing means (23) prints substantially the same information as each other respectively on said print areas (S) provided at each of said plurality of RFID labels (T1, T2, T3).

17. The label body producing apparatus (1) according to Claim 15 or 16,
wherein said label body producing apparatus (1) further comprises second coordination control means (S150, S155, S160; S150, S155', S160) that coordinate control of said transmitting/receiving means (LC) and said printing means (23) in the manner that said transmitting/receiving means (LC) writes information substantially different from each other respectively in said IC circuit parts (151) of said plurality of RFID circuit elements (To) respectively provided at each of said plurality of RFID labels (T1, T2, T3), and said printing means (23) prints substantially the same information as each other respectively on said print areas (S) provided at each of said plurality of RFID labels (T1, T2, T3).

18. The label body producing apparatus (1) according to any one of Claims 15 to 17,
wherein said label body producing apparatus (1) further comprises third coordination control means (S170, S173, S175; S170, S173', S175) that coordinates control of said transmitting/receiving means (LC) and said printing means (23) in the manner that said transmitting/receiving means (LC) writes substantially the same information as each other respectively in said IC circuit parts (151) of said plurality of RFID circuit elements (To) respectively provided at each of said plurality of RFID labels (T1, T2, T3), and said printing means (23) prints information substantially different from each other respectively on said print areas (S) provided at each of said plurality of RFID labels (T1, T2, T3).

19. The label body producing apparatus (1) according to any one of Claims 15 to 18,
wherein said label body producing apparatus (1) further comprises fourth coordination control means (S180, S183, S185; S180, S183', S185) that coordinates control of said transmitting/receiving means (LC) and said printing means (23) in the manner that said transmitting/receiving means (LC) writes information substantially different from each other respectively in said IC circuit parts (151) of said plurality of RFID circuit elements (To) respectively provided at each of said plurality of RFID labels (T1, T2, T3), and said printing means (23) prints information substantially different from each other respectively on said print areas (S) provided at each of said plurality of RFID labels (T1, T2, T3).
